# EUROPÄISCHE PATENTSCHRIFT

(11) **EP 2 550 090 B1**
(45) Veröffentlichungstag und Bekanntmachung des Hinweises auf die Patenterteilung: **05.10.2016**
(21) Anmeldenummer: 11709443.3
(22) Anmeldetag: 23.03.2011
(51) Int. Cl.: B01F 7/00, B01F 3/08, B01F 13/10, B29B 7/40, C08G 63/20, C08G 63/183, C08G 63/685, C08G 63/688, C08J 3/05, C09D 167/00, C09D 169/00

(54) **VERFAHREN ZUR HERSTELLUNG WÄSSRIGER DISPERSIONEN THERMOPLASTISCHER POLYESTER**
METHOD TO PRODUCE AQUEOUS DISPERSIONS OF THERMOPLASTIC POLYESTERS
PROCEDE DE FABRICATION D'UNE DISPERSION AQUEUSE CONTENANT DU POLYESTER THERMOPLASTIQUE

(30) Priorität: 24.03.2010 EP 10157652
(43) Veröffentlichungstag der Anmeldung: 30.01.2013
(73) Patentinhaber: BASF SE, 67056 Ludwigshafen am Rhein (DE)
(72) Erfinder: REN, Liqun, 68163 Mannheim (DE); FERNANDEZ RAMIREZ, Gimmy Alex, 67063 Ludwigshafen (DE); YAMAMOTO, Motonori, 68199 Mannheim (DE); SEYFFER, Hermann, 69123 Heidelberg (DE); SKUPIN, Gabriel, 67346 Speyer (DE)
(86) Internationale Anmeldenummer: PCT/EP2011/054471
(87) Internationale Veröffentlichungsnummer: WO 2011/117308

(56) Entgegenhaltungen:
- WO-A1-2009/127555
- WO-A1-2009/127556
- US-A1- 2002 076 639
- DATABASE CA [Online] CHEMICAL ABSTRACTS SERVICE, COLUMBUS, OHIO, US; 12. Mai 1984 (1984-05-12), UNO, KEIICHI ET AL: "Process for manufacturing an adhesive structure", XP002644709, gefunden im STN Database accession no. 1974:492615 -& JP 48 037974 B (TOYOBO CO., LTD.; SONY CORP.) 14. November 1973 (1973-11-14)
- DATABASE CA [Online] CHEMICAL ABSTRACTS SERVICE, COLUMBUS, OHIO, US; 12. Mai 1984 (1984-05-12), UNO, KEIICHI ET AL: "Process for manufacturing an adhesive structure", XP002644710, gefunden im STN Database accession no. 1974:492614 -& JP 48 037975 B (TOYOBO CO., LTD.; SONY CORP.) 14. November 1973 (1973-11-14)

## Beschreibung

Die vorliegende Erfindung betrifft ein Verfahren zur Herstellung wässriger Dispersionen von thermoplastischen Polymeren, die eine Vielzahl von Estergruppen und/oder Carbonatgruppen im Polymerrückgrad aufweisen, die eine Säurezahl von weniger als 5mg KOH/g insbesondere maximal 3 mg KOH/g besitzen und bei 180 °C eine Nullscherviskosität η₀ (180 °C) von wenigstens 60 Pa·s aufweisen. Die Erfindung betrifft auch die nach diesem Verfahren erhältlichen Polymerdispersionen und deren Verwendung.

Wässrige Dispersionen von thermoplastischen Polymeren, die eine Vielzahl von Estergruppen und/oder Carbonatgruppen im Polymerrückgrad aufweisen und die eine Säurezahl von maximal 10 mg KOH/g besitzen, insbesondere Polyester und speziell biologisch abbaubare Polyester, sind für viele Anwendungen, insbesondere als Bindemittel, von besonderem Interesse. Anders als wässrige Polymerdispersionen, deren Polymerketten ein aus Kohlenstoffatomen aufgebautes Rückgrat aufweisen, lassen sich wässrige Dispersionen von Polymeren, die eine Vielzahl von Estergruppen und/oder Carbonatgruppen im Polymerrückgrad aufweisen, in der Regel nicht durch ein Emulsionspolymerisationsverfahren herstellen. Vielmehr ist es üblicherweise notwendig, derartige Polymere im Wege einer Polykondensation herzustellen und im Nachhinein in eine wässrige Dispersion zu überführen. Hierzu gibt es grundsätzlich mehrere Möglichkeiten.

Zum einen kann man eine Lösung des Polymeren in einem organischen, vorzugsweise mit Wasser mischbaren Lösungsmittel mit dem wässrigen Dispergiermedium vermischen und das organische Lösungsmittel wieder entfernen. Ein vollständiges Entfernen der organischen Lösungsmittel ist jedoch in der Regel nicht möglich, ohne Qualitätseinbußen der Dispersion hinzunehmen, beispielsweise durch einen hydrolysebedingten Molekulargewichtsabbau des Polymeren und/oder durch Destabilisierung der dispersen Phase.

Polymere mit einer hohen Säurezahl wiederum lassen sich in Wasser emulgieren, indem man das wässrige Dispergiermedium mit einer Base alkalisch stellt, um so die Carboxylgruppen zu deprotonieren und auf diese Weise die Selbstemulgierung des Polymeren zu fördern. Eine solche Vorgehensweise ist beispielsweise in der WO 98/12245 beschrieben. Das dort beschriebene Verfahren ist zur Herstellung wässriger Dispersionen der eingangs definierten Polymere aufgrund ihrer niedrigen Säurezahl naturgemäß nicht anwendbar.

Eine weitere Möglichkeit besteht darin, eine Schmelze des Polymeren in dem wässrigen Dispergiermedium zu emulgieren und anschließend abzukühlen. Hierbei besteht allerdings die Gefahr, dass unter diesen Bedingungen ein Molekulargewichtsabbau, bedingt durch die Hydrolyse der Estergruppen bzw. der Carbonatgruppen im Polymerrückgrat auftritt.

So beschreibt die EP 1302502 A1 ein Verfahren zur Herstellung wässriger Dispersionen von biologisch abbaubaren Polyestern, bei dem man eine Schmelze des Polyesters in eine wässrige Lösung einer oberflächenaktiven Substanz, die eine geringe Oberflächenspannung aufweist, durch Verkneten einarbeitet. Hierbei ist darauf zu achten, dass das Verhältnis der Viskosität (Nullscherviskosität η₀) der Polymerschmelze und die Viskosität der wässrigen Lösung nicht zu stark voneinander abweichen, da ansonsten keine stabile Dispersionen erhalten werden. Dies bedingt zum einen, dass nur hochviskose Dispersionen des Polyesters mit Viskositätswerten oberhalb 2 Pa·s hergestellt werden können und dass nur solche Polyester verwendet werden können, deren Nullscherviskosität η₀ bei der Einarbeitungstemperatur hinreichend niedrig ist. Derartige Polyester weisen jedoch für viele Zwecke keine zufriedenstellenden Anwendungseigenschaften auf. Zudem tritt unter diesen Bedingungen häufig ein Molekulargewichtsabbau des Polyesters auf.

Die US 2005/058712 wiederum beschreibt ein Verfahren zur Herstellung wässriger Dispersionen von biologisch abbaubaren Polyestern, bei dem man eine Schmelze aus einem Gemisch des Polyesters mit einem die Schmelzviskosität verringernden Additiv, z. B. Triacetin, in einer wässrigen Lösung einer oberflächenaktiven Substanz emulgiert. Als nachteilig erweist sich jedoch der Zusatz des die Viskosität der Schmelze verringernden Additivs, das naturgemäß in der Dispersion verbleibt, was zu einer Beeinträchtigung der Anwendungseigenschaften führt. Zudem lassen sich auf diese Weise nur Polyester emulgieren, deren Nullscherviskosität η₀ bei der Einarbeitungstemperatur hinreichend niedrig ist. Derartige Polyester weisen jedoch für viele Zwecke keine zufriedenstellenden Anwendungseigenschaften auf.

Die US 2002/0076639 beschreibt unter anderem die Herstellung von wässrigen Polyester-Dispersionen von Carbonsäuregruppen aufweisenden, Endgruppen modifizierten Polyestern mit einer Säurezahl von vorzugsweise 7 bis 70 mg KOH/ g Polyester durch Schmelzemulgierung unter Verwendung eines Rotor-Stator-Mischers. Aufgrund der Säurezahl weisen die Polyesterpartikel einen amphiphilen Charakter auf, welcher die Emulgierung fördert. Die Verwendung des Rotor-Stator-Mischers dient dabei der Erzeugung kugelförmiger Polyesterpartikel.

Die US 6,521,679 beschreibt die Herstellung von Polyester-Dispersionen wasserunlöslicher Polyester durch Schmelzemulgierung von Gemischen des wasserunlöslichen Polyesters mit wasserlöslichen Polyesterharzen, die 0,1 bis 1,5 mmol Sulfonsäuregruppen pro Gramm des wasserlöslichen Polyesters aufweisen. Die Schmelzemulgierung erfolgt unter Verwendung eines Extruders und führt zu hochviskosen Dispersionen, die mit Wasser verdünnt werden können. Die eingesetzten wasserunlöslichen Polyester weisen eine niedrige Nullscherviskosität auf.

Der vorliegenden Erfindung liegt somit die Aufgabe zugrunde, ein Verfahren zur Herstellung von wässrigen Dispersionen der eingangs definierten Polymere bereitzustellen. Insbesondere sollte das Verfahren es erlauben, Polymere, die eine Vielzahl an Ester- und/oder Carbonatgruppen im Polymerrückgrat aufweisen, ohne signifikanten Molekulargewichtsabbau in eine wässrige Dispersion zu überführen.

Es wurde nunmehr gefunden, dass thermoplastische Polymere der eingangs definierten Art trotz ihrer vergleichsweise hohen Nullscherviskosität η₀ (180 °C) auch ohne den Zusatz von Fließhilfsmitteln und/oder ohne signifikante Viskositätserhöhung der wässrigen Phase durch Zusatz von Verdickern in einem wässrigen Dispergiermedium emulgiert werden können, wenn man eine Zusammensetzung des Polymeren, die zu wenigstens 99 Gew.-% aus dem Polymeren besteht, bei einer Temperatur oberhalb der Erweichungs- bzw. Schmelztemperatur des Polymeren mittels einer Vorrichtung, die wenigstens einen Rotor-Stator-Mischer umfasst, in ein wässriges Dispergiermedium einbringt, das wenigstens eine oberflächenaktive Substanz enthält, und die dabei erhaltene wässrige Emulsion des Polymeren abschreckt.

Diese Aufgabe konnte somit durch das im Folgenden näher erläuterte Verfahren gelöst werden. Dementsprechend betrifft die vorliegende Erfindung ein Verfahren zur Herstellung wässriger Dispersionen von thermoplastischen Polymeren, die eine Vielzahl von Ester- und/oder Carbonatgruppen im Polymerrückgrad aufweisen, die eine Säurezahl von weniger als 5 mg KOH/g, insbesondere weniger als 3 mg KOH/g besitzen und bei 180 °C eine Nullscherviskosität η₀(180 °C) von wenigstens 60 Pa·s, häufig wenigstens 80 Pa·s, insbesondere wenigstens 100 Pa·s, z. B. 60 bis 20000 Pa·s, insbesondere 80 bis 15000 Pa·s und speziell 100 bis 10000 Pa·s aufweisen, wobei man eine Zusammensetzung des Polymeren, die zu wenigstens 99 Gew.-% aus dem Polymeren besteht, bei einer Temperatur oberhalb der Schmelztemperatur bzw. der Erweichungstemperatur des Polymeren in ein wässriges Dispergiermedium einbringt, das wenigstens eine oberflächenaktive Substanz enthält, die unter Emulgatoren und Schutzkolloiden ausgewählt ist, und die dabei erhaltene wässrige Emulsion des Polymeren abschreckt, dadurch gekennzeichnet, dass das Einbringen der Zusammensetzung des Polymeren in das wässrige Dispergiermedium in einer Mischvorrichtung erfolgt, die wenigstens einen Rotor-Stator-Mischer aufweist.

Das erfindungsgemäße Verfahren ist mit einer Reihe von Vorteilen verbunden. Zum einen erlaubt es die Herstellung wässriger Dispersionen von thermoplastischen Polymeren mit den hier genannten Eigenschaften, die mit den im Stand der Technik gelehrten Verfahren nicht in wässrige Dispersionen überführt werden können. Daher sind die nach dem erfindungsgemäßen Verfahren erhältlichen wässrigen Dispersionen der schmelzfähigen Polymere neu und somit ebenfalls Gegenstand der vorliegenden Anmeldung.

Anders als in den Verfahren des Standes der Technik ist weder der Einsatz organischer Lösungsmittel erforderlich noch der Zusatz von Mitteln zur Verringerung der Schmelzviskosität. Zudem führt das erfindungsgemäße Verfahren nicht oder nicht in nennenswerte Weise zu einem Molekulargewichtsabbau, wie er aufgrund der im Polymerrückgrat der Polymere enthaltenen Esterfunktionen bzw. Carbonatfunktionen prinzipiell zu erwarten gewesen wäre. Zudem lassen sich mit dem erfindungsgemäßen Verfahren niedrigviskose Dispersionen herstellen mit Viskositätswerten von 2 Pa·s (Brookfield, 20 °C, bestimmt nach DIN EN ISO 2555) oder darunter, wobei solche Viskositätswerte auch bei Feststoffgehalten von 40 Gew.-% oder darüber erreichbar sind.

Im erfindungsgemäßen Verfahren wird das thermoplastische Polymer, im Falle eines amorphen Polymers bei einer Temperatur oberhalb der Erweichungstemperatur des Polymeren bzw. im Falle eines kristallinen oder teilkristallinen Polymers oberhalb des Schmelzpunkts des Polymeren, in das wässrige Dispergiermedium eingebracht. Unter der Erweichungstemperatur versteht man bei amorphen Polymeren diejenige Temperatur, welche der Glasübergangstemperatur entspricht, wie sie beispielsweise mittels Dynamischer Differenzkalorimetrie (DSC) nach ASTM D 3418 oder vorzugsweise nach DIN 53765 oder durch Dynamisch Mechanische Analyse (DMA) bestimmt werden kann. Unter der Schmelztemperatur versteht man diejenige Temperatur, die zu einem Schmelzen bzw. Erweichen des Polymeren führt und die in an sich bekannter Weise mittels Dynamischer Differenzkalorimetrie (DSC) nach DIN 53765 oder Differenzthermoanalyse (DTA) bestimmt werden kann.

Unter einem amorphen Polymer versteht man ein Polymer, das weniger als 1 Gew.-% kristalline Bereiche aufweist. Unter einem kristallinen bzw. einem teilkristallinen Polymer versteht man ein Polymer, das mehr als 1 Gew.-%, insbesondere wenigstens 5 Gew.-% kristalline Bereiche aufweist. Der Kristallinitätsgrad eines Polymeren kann in an sich bekannter Weise durch Röntgendiffraktometrie oder durch thermochemische Methoden wie DTA oder DSC in an sich bekannter Weise ermittelt werden.

Erfindungsgemäß erfolgt das Einbringen mittels einer Rotor-Stator-Vorrichtung zum Mischen von Flüssigkeiten (im Folgenden auch Rotor-Stator-Mischer).

Rotor-Stator-Mischer sind dem Fachmann geläufig und umfassen grundsätzlich alle dynamischen Mischertypen, bei denen ein schnelllaufender, vorzugsweise rotationssymmetrischer Rotor im Zusammenspiel mit einem Stator einen oder mehrere, im Wesentlichen ringspaltförmige Arbeitsbereiche bildet. In diesen Arbeitsbereichen ist das Mischgut starken Schub- und Scherbeanspruchungen ausgesetzt, wobei in den Ringspalten häufig starke Turbulenzen herrschen, die den Mischvorgang ebenfalls begünstigen. Im Betriebszustand wird die Rotor-Stator-Vorrichtung mit einer relativ hohen Drehzahl von in der Regel 1000 bis 20000 U/min betrieben. Hierdurch ergeben sich hohe Umfanggeschwindigkeiten und eine hohe Scherrate, wodurch die Emulsion starken Scher- und Schubspannungen ausgesetzt wird, die zu einer effektiven Zerteilung der Schmelze und damit zu einer sehr effektiven Emulgierung führen.

Zu den Rotor-Stator-Mischern zählen beispielsweise Zahnkranzdispergatoren, Ringspaltmühlen und Kolloidmühlen.

Bevorzugt sind solche Rotor-Stator-Mischer, die Mittel zur Erzeugung von Kavitationskräften aufweisen. Derartige Mittel können rotor- und/oder statorseitig angeordnete Erhebungen sein, die in die Mischkammer hineinragen und die wenigstens eine Fläche aufweisen, deren Flächennormale einen tangentialen Anteil aufweist, wie beispielsweise Stifte, Zähne oder Messer oder koaxiale Ringe mit radial angeordneten Schlitzen.

Vorzugsweise weist der Rotor-Stator-Mischer rotorseitig wenigstens einen rotationssymmetrisch angeordneten Zahnkranz und/oder wenigstens einen rotationssymmetrisch angeordneten Ring mit radialen Schlitzen (Zahnlücken) auf. Derartige Vorrichtungen werden auch als Zahnkranzdispergatoren bzw. Zahnkranzdispergiermaschinen bezeichnet. Insbesondere weist der Rotor-Stator-Mischer sowohl rotorseitig als auch statorseitig wenigstens einen rotationssymmetrisch angeordneten Zahnkranz und/oder Ring mit radialen Schlitzen (Zahnlücken) auf, wobei die rotor- und statorseitig angeordneten Zahnkränze/Ringe koaxial angeordnet sind und unter Ausbildung eines Ringspalts ineinandergreifen.

In einer besonders bevorzugten Ausführungsform handelt es sich bei dem Rotor-Stator-Mischer um eine Zahnkranzdispergiermaschine, die einen konischen Stator mit einer konzentrischen kegelstumpfförmigen Aussparung und einen ebenfalls konzentrischen konischen Rotor aufweist, wobei der Rotor so in den kegelstumpfförmigen Arbeitsraum des Stators hineinragt, dass ein ringförmiger Arbeitsraum gebildet wird, in welchen rotor- und statorseitig Zähne hineinragen, die jeweils in Form von einem oder mehreren, z. B. 2, 3 oder 4 rotorseitigen und einem oder mehreren, z. B. 1, 2, 3 oder 4 statorseitigen koaxialen Zahnkränzen jeweils so auf dem Rotor und dem Stator angeordnet sind, dass die Zahnkränze versetzt ineinander greifen.

Derartige Vorrichtungen sind dem Fachmann beispielsweise aus der DE 10024813 A1 und US 2002/076639 bekannt und werden beispielsweise von der Fa. Cavitron Verfahrenstechnik v. Hagen & Funke GmbH, Sprockhövel, Deutschland, angeboten.

In den Zahnkranzdispergiermaschinen dieser bevorzugten Ausführungsform weist der Arbeitsraum in der Regel eine Breite b auf, die etwa gleich der Zahnhöhe ist. Typischerweise haben die Statorzähne und die Rotorzähne abgerundete Ecken, und zwar sowohl an den oberen Zahnenden als auch bei den Hohlecken am Zahnfuß. Die Zähne sind in der Regel feinpoliert und haben üblicherweise eine extrem glatte Oberfläche. Sie sind typischerweise zueinander komplementär ausgebildet, so dass bei miteinander fluchtenden Zähnen sich ein an allen Stellen etwa gleich schmaler mäanderförmiger Zahnspalt ergibt. Der Stator und der Rotor sind in der Regel jeweils einstückig, d. h. die Statorzähne und Rotorzähne sind innen einstückig angeformt. Dies bedeutet, dass keine separaten Zahnringe vorhanden sind und sich somit auch keine Fremdstoffe darunter oder in Zwischenräumen absetzen können. Der Rotor ist üblicherweise mit Befestigungsmitteln, typischerweise mit Schrauben, an einem Rotorträger befestigt, welcher an der Welle drehfest angebracht ist. In der Regel drückt ein Befestigungsmittel, beispielsweise eine Schraube, den Rotor gegen den Rotorträger und diesen gegen eine Wellenhülse, welche typischerweise eine Welle umgibt und axial an der Welle abgestützt ist. Durch Lösen des Befestigungsmittels kann die Einheit aus Rotorträger und Rotor von der Welle entfernt werden.

Rotor und Stator sind von einem Gehäuse umgeben, welches Einlässe für die Polymerschmelze und das wässrige Dispergiermedium und Auslässe für die Dispersion aufweist. In einer bestimmten Ausgestaltung ist das Gehäuse seiner dem Einlass abgewandten Rückseite durch eine Rückwand abgeschlossen, die einen Wellendurchgang aufweist und typischerweise in einen Zwischenraum hinein ausgebaucht ist. Der Wellendurchgang, bzw. der Durchgang der Wellenhülse ist mit einer Dichtungsanordnung abgedichtet, die vorzugsweise eine Gleitringdichtung mit einem feststehenden Ring und einem mitdrehenden Ring aufweist. In einer speziellen Ausgestaltung begrenzt die Rückwand des Gehäuses einen hinter dem Rotorträger gebildeten ringförmigen Rückraum des Gehäuses.

Der Arbeitsraum zwischen Stator und Rotor ist vorzugsweise radial nach außen durch eine Lochwand des Stators begrenzt. Die Lochwand enthält typischerweise zahlreiche radial angeordnete Bohrungen. Sie ist vorzugsweise von einer weiteren Lochwand umgeben, die Bestandteil eines am Rotorträger befestigten Ringes ist. Die Bohrungen der Lochwände von Rotor und Stator kommen bei Drehung des Rotors abwechselnd zur Deckung und zum Verschluss. Auf diese Weise wird die Flüssigkeit nach dem Passieren der Zähne in schmalen, zeitlich begrenzten Strahlen in einen Ringraum gedrückt, der den Rotor umgibt und der mit dem gegebenenfalls vorhandenen Rückraum in Verbindung steht.

Sofern vorhanden, hat der Rückraum zwischen Rotorträger und Gehäuserückwand vorzugsweise eine Breite, die wesentlich größer ist als die Breite b des Arbeitsraumes. Die kleinste Breite ergibt sich am äußeren Umfang des Rückraumes, und die größte Breite ergibt sich im wellennahen Bereich. Die Befestigungsmittel, die auch den Ring am Rotorträger festhalten, bilden vorzugsweise mit ihren Köpfen Pumpschaufeln zum Befördern und Weitertreiben der in dem Rückraum enthaltenen Flüssigkeit. Da der Rotor im Betriebszustand mit einer relativ hohen Drehzahl von in der Regel 1000 bis 20000 U/min rotiert, ergibt sich neben einer hohen Scherrate eine hohe Zentrifugalwirkung, wodurch die Flüssigkeit nach Außen getrieben und dem Auslass zugeführt wird.

Erfindungsgemäß vermischt man die Zusammensetzung des Polymeren mit dem wässrigen Dispergiermedium bei einer Temperatur oberhalb der Erweichungstemperatur des Polymeren. Hierzu wird üblicherweise auf eine Temperatur oberhalb der Erweichungstemperatur erwärmt und der Mischvorrichtung, vorzugsweise kontinuierlich, zugeführt. In gleichem Maße wird die benötigte Menge an wässrigem Dispergiermedium, vorzugsweise kontinuierlich, der Mischvorrichtung zugeführt. Die Menge an Dispergiermedium wird dabei in der Regel so gewählt, dass der gewünschte Feststoffgehalt der Dispersion eingestellt wird. Es ist jedoch auch möglich, das Dispergiermedium in größerer Menge einzusetzen und anschließend die erhaltene Dispersion aufzukonzentrieren. Ebenso ist es möglich, zunächst eine konzentriertere Dispersion herzustellen und diese mit weiterem Dispergiermittel und/oder Wasser zu verdünnen. Das Massenverhältnis von zugeführtem Polymer zu der Gesamtmenge an wässrigem Dispergiermedium liegt typischerweise im Bereich von 1 : 20 bis 1,2 : 1, häufig im Bereich von 1 : 10 bis 1 : 1,1 und insbesondere im Bereich von 1 : 3 bis 1 : 1. Bei kontinuierlicher Zugabe von Polymer und wässrigem Dispergiermedium liegt das Massenverhältnis der zugeführten Stoffströme in den vorgenannten Bereichen. Bei einer mehrstufigen Zugabe an Dispergiermedium kann das Massenverhältnis von zugeführtem Polymer zu der in der ersten bis zur vorletzten Stufe zugeführten Gesamtmenge an wässrigem Dispergiermedium auch bis zu 4:1 oder bis zu 2,3:1 betragen. Vorzugsweise erfolgt die Zufuhr von Polymer und wässrigem Dispergiermedium bei einer konstanten Zugaberate, d. h. das Massenverhältnis von thermoplastischem Polymer und Dispergiermedium ist während des Verfahrens konstant oder weicht nicht mehr als 10 % von dem vorgewählten Massenverhältnis ab.

Das Einbringen des thermoplastischen Polymeren in das wässrige Dispergiermedium erfolgt typischerweise bei einer Temperatur von wenigstens 5 K, häufig wenigstens 10 K und insbesondere wenigstens 20 K, z. B. im Bereich von 5 bis 150 K, häufig im Bereich von 10 bis 100 K und insbesondere im Bereich von 20 bis 80 K oberhalb der Schmelz- bzw. Erweichungstemperatur des Polymeren. Diese Temperatur wird im Folgenden auch als Mischtemperatur bezeichnet. In der Regel erfolgt das Einbringen des Polymeren in das wässrige Dispergiermedium bei einer Temperatur von maximal 300 °C, z. B. im Bereich von 50 bis 300 °C, häufig 60 bis 250 °C und insbesondere 100 bis 200 °C.

Aufgrund der vergleichsweise hohen Mischtemperatur erfolgt das Einbringen der Schmelze in das wässrige Dispergiermedium üblicherweise bei einem Druck oberhalb Atmosphärendruck, in der Regel bei einem Druck im Bereich von 1 bis 50 bar, häufig 1,1 bis 40 bar, insbesondere im Bereich von 1,5 bis 20 bar.

Der Mischvorgang kann in einer oder mehreren, z. B. 2, 3, 4 oder 5 Stufen durchgeführt werden, wobei zumindest eine Stufe in einem Rotor-Stator-Mischer durchgeführt wird. Bei einem mehrstufigen Verfahren werden vorzugsweise alle Stufen in Rotor-Stator-Mischern durchgeführt.

In einer ersten Ausführungsform der Erfindung erfolgt das Mischen in einer Stufe, d. h. die Mischvorrichtung umfasst einen Rotor-Stator-Mischer. Hierbei werden Polymer und Dispergiermittel in der Regel in den zur Herstellung der Dispersion benötigten Mengen dem Rotor-Stator-Mischer zugeführt. Hierzu hat es sich bewährt, das Dispergiermittel vor der Zufuhr auf die gewünschte Mischtemperatur oder eine Temperatur von wenigstens 20 K unterhalb der Mischtemperatur, vorzugsweise auf eine Temperatur im Bereich von +/- 20 K der Mischtemperatur zu erwärmen.

In einer zweiten, bevorzugten Ausführungsform der Erfindung erfolgt das Mischen in mehreren Stufen, d. h. in einer Mischvorrichtung, die mehrere, z. B. 2, 3, 4 oder 5, insbesondere 3 oder 4, seriell miteinander verbundene Rotor-Stator-Mischer aufweist. Hierbei hat es sich bewährt, in die erste Stufe, d. h. in den ersten Rotor-Stator-Mischer, das thermoplastische Polymer und eine Teilmenge des Dispergiermediums zu geben und dort bei einer Temperatur oberhalb der Schmelz- oder Erweichungstemperatur des Polymeren mit der Teilmenge des wässrigen Dispergiermediums zu vermischen. Die in die erste Stufe gegebene Teilmenge des Dispergiermediums beträgt dabei üblicherweise 10 bis 60 Gew.-%, insbesondere 15 bis 40 Gew.-%, bezogen auf die Gesamtmenge des in die Mischvorrichtung eingebrachten Dispergiermediums. Das Einbringen des thermoplastischen Polymeren in die Teilmenge des wässrigen Dispergiermediums erfolgt typischerweise bei einer Temperatur von wenigstens 5 K, häufig wenigstens 10 K und insbesondere wenigstens 20 K, z. B. im Bereich von 5 bis 150 K, häufig im Bereich von 10 bis 100 K und insbesondere im Bereich von 20 bis 80 K oberhalb der Schmelz- bzw. Erweichungstemperatur des Polymeren. In der Regel wird die Mischtemperatur im ersten Rotor-Stator-Mischer maximal 300°C betragen, und liegt z. B. im Bereich von 50 bis 300 °C, häufig 80 bis 250 °C und insbesondere 100 bis 200 °C. Hierzu hat es sich bewährt, die in den ersten Rotor-Stator-Mischer zugeführte Teilmenge an Dispergiermittel vor der Zufuhr auf die gewünschte Mischtemperatur oder eine Temperatur von wenigstens 20 K unterhalb der Mischtemperatur, vorzugsweise auf eine Temperatur im Bereich von +/- 20 K der Mischtemperatur zu erwärmen. Die im ersten Rotor-Stator-Mischer anfallende wässrige Dispersion wird anschließend in einen weiteren Rotor-Stator-Mischer überführt und dort mit einer weiteren Teilmenge oder der Restmenge des Dispergiermediums vermischt. Dem zweiten Rotor-Stator-Mischer können ein oder mehrere, z. B. 1 oder 2, weitere Rotor-Stator-Mischer folgen, wobei die im zweiten Rotor-Stator-Mischer anfallende Dispersion in dem bzw. den gegebenenfalls weiteren Rotor-Stator-Mischer(n), z. B. dem dritten Rotor-Stator-Mischer, mit der Restmenge oder einer weiteren Teilmenge des wässrigen Dispergiermediums vermischt werden. Die Temperatur, bei der die im ersten Rotor-Stator-Mischer angefallene Dispersion im zweiten Rotor-Stator-Mischer mit weiterem Dispergiermedium vermischt wird, kann der Temperatur im ersten Rotor-Stator-Mischer entsprechen oder darüber oder darunter liegen. Vorzugsweise liegt sie unterhalb der Temperatur im ersten Rotor-Stator-Mischer. Insbesondere hat es sich bewährt, wenn die Mischtemperatur im ersten der seriell miteinander verbundenen Rotor-Stator-Mischer wenigstens 20 K, vorzugsweise wenigstens 30 K, z. B. 20 bis 200 K, insbesondere 30 bis 120 K oberhalb der Temperatur im letzten der seriell miteinander verbundenen Rotor-Stator-Mischer liegt. Insbesondere liegt die Temperatur im letzten der seriell miteinander verbundenen Rotor-Stator-Mischer wenigstens 5 K insbesondere wenigstens 10 K, z. B. 5 bis 200 K insbesondere 10 bis 150 K unter der Schmelz- bzw. Erweichungstemperatur des thermoplastischen Polymeren.

In einer bevorzugten Ausführungsform der Erfindung wird man das thermoplastische Polymer und das wässrige Dispergiermedium, welches die wenigstens eine oberflächenaktive Substanz enthält, gleichzeitig, vorzugsweise kontinuierlich und insbesondere mit einer konstanten Volumenrate dem Rotor-Stator-Mischer bzw. den Rotor-Stator-Mischern zuführen und in gleichem Maße die Dispersion entnehmen.

Es ist jedoch auch möglich, in einem vorgelagerten Schritt das thermoplastische Polymer mit dem wässrigen Dispergiermedium, welches die wenigstens eine oberflächenaktive Substanz enthält, unter Erhalt einer Primäremulsion bei einer Temperatur oberhalb der Schmelz- bzw. Erweichungstemperatur des Polymeren zu vermischen und diese Mischung dem Rotor-Stator-Mischer zuzuführen. Dieser vorgelagerte Schritt wird vorzugsweise in einem Kneter oder Extruder durchgeführt. Die dabei erhaltene Präemulsion wird anschließend dem bzw. den Rotor-Stator-Mischer(n) zugeführt. Vorzugsweise wird die Präemulsion bei einer Temperatur oberhalb der Schmelz- bzw. Erweichungstemperatur des Polymeren gehalten.

Die zunächst erhaltene wässrige Emulsion des Polymeren in dem wässrigen Dispergiermedium, welche in der Mischvorrichtung anfällt, wird anschließend, d. h. nach Verlassen der Mischvorrichtung abgeschreckt, d. h. rasch auf eine Temperatur unterhalb der Erweichungstemperatur des Polymeren abgekühlt, um eine Agglomeration der Polymerpartikel in der Emulsion zu vermeiden. Das Abschrecken kann in an sich üblicher Weise vorgenommen werden, beispielsweise durch geeignete Kühlvorrichtungen und/oder durch Verdünnen mit gekühltem Dispergiermittel. Vorzugsweise sollte die Emulsion nicht länger als 20 s, insbesondere nicht länger als 10 s nach Verlassen der Mischvorrichtung bei Temperaturen oberhalb der Schmelz- bzw. Erweichungstemperatur des Polymeren verweilen. Im Falle einer Mischvorrichtung, welche mehrere, seriell miteinander verbundene Rotor-Stator-Mischer aufweist, kann das Abschrecken auch in dem 2. und den gegebenenfalls weiteren Rotor-Stator-Mischern erfolgen.

Das wässrige Dispergiermedium enthält neben Wasser erfindungsgemäß wenigstens eine oberflächenaktive Substanz. Hierzu zählen polymere oberflächenaktive Substanzen mit Molekulargewichten oberhalb 2000 Dalton (Zahlenmittel), z. B. 2200 bis 10⁶ Dalton, die in der Regel als Schutzkolloide bezeichnet werden, und niedermolekulare oberflächenaktive Substanzen mit Molekulargewichten bis 2000 Dalton, häufig bis 1500 Dalton (Zahlenmittel), die in der Regel als Emulgatoren bezeichnet werden. Die oberflächenaktiven Substanzen können kationisch, anionisch oder neutral sein.

In einer bevorzugten Ausgestaltung der Erfindung enthält das wässrige Dispergiermedium wenigstens ein Schutzkolloid, beispielsweise ein neutrales, anionisches oder kationisches Schutzkolloid, gegebenenfalls in Kombination mit einem oder mehreren Emulgatoren.

Beispiele für Schutzkolloide sind wasserlösliche Polymere wie beispielsweise
- neutrale Schutzkolloide: beispielsweise Polysaccharide, z. B. wasserlösliche Stärken, Stärkederivate und Cellulosederivate wie Methylcellulose, Hydroxypropylcellulose, Hydroxyethylcellulose, Hydroxypropylmethylcellulose, weiterhin Polyvinylalkohole, einschließlich teilverseiftem Polyvinylacetat mit einem Verseifungsgrad von vorzugsweise wenigstens 40 %, insbesondere wenigstens 60 %, Polyacrylamid, Polyvinylpyrrolidon, Polyethylenglykole, Pfropfpolymerisate von Vinylacetat und/oder Vinylpropionat auf Polyethylenglykole, ein- oder beidseitig mit Alkyl-, Carboxyl- oder Aminogruppen endgruppenverschlossene Polyethylenglykole;
- anionische wasserlösliche Polymere, deren Polymerrückgrad eine Vielzahl Carboxylgruppen, Sulfonsäuregruppen bzw. Sulfonatgruppen und/oder Phosphonsäuregruppen bzw. Phosphonatgruppen aufweist, beispielsweise Carboxymethylcellulose, Homo- und Copolymere ethylenisch ungesättigter Monomere, die wenigstens 20 Gew.-%, bezogen auf die Gesamtmenge der Monomere, wenigstens eines ethylenisch ungesättigten Monomers, das wenigstens eine Carboxylgruppe, Sulfonsäuregruppe und/order Phosphonsäuregruppe einpolymerisiert enthält, enthalten und deren Salze, insbesondere die Alkalimetall- und Ammoniumsalze. In den vorgenannten anionischen wasserlöslichen Polymeren, liegen im Wässrigen üblicherweise die an das Polymerrückgrat gebundenen Sulfonsäuregruppen in der Salzform, d. h. als Sulfonatgruppen, und die Phosphonsäuregruppen dementsprechend als Phosphonatgruppen vor. Bei den Gegenionen handelt es sich dann typischerweise um Alkalimetall- und Erdalkalimetallionen wie Natriumionen, Calciumionen und Ammoniumionen (NH₄⁺);
- kationische Polymere wie Polydiallyldimethylammoniumsalze, z.B. die Chloride;
- anionisch oder kationisch modifizierten Stärken; Beispiele für anionisch modifizierte Stärken sind carboxymethylierte Stärken und n-Octenylsuccinylmodifizierte Stärke, wie sie beispielsweise als Produkte von der Firma Cargill erhältlich sind (CEmCap / CEmTex / CDeliTex n-octenylsuccinylated starches); Beispiele für kationisch modifizierte Stärken sind Stärken, die mit 2-Hydroxy-3-(trimethylammonium)propylgruppen modifiziert sind, z. B. Stärken, welche durch Umsetzung konventioneller Stärken mit *N*-(3-Chlor-2-hydroxypropyl)trimethylammoniumchlorid (CHPTAC) erhältlich sind, und die vorzugsweise einen Substitutionsgrad von 0,02 bis 0,1 aufweisen. Beispiele hierfür sind die Produkte Hi-Cat 21370 von der Firma Roquette und Perlcore 134P von der Firma Lyckeby.

Zu den anionischen wasserlöslichen Polymere, deren Polymerrückgrad eine Vielzahl Carboxylgruppen, Sulfonsäure- bzw. Sulfonatgruppen und/oder Phosphonsäure- bzw. Phosphonatgruppen aufweist, zählen beispielsweise:
- Homo- und Copolymere monoethylenisch ungesättigter Monocarbonsäuren mit 3 bis 6 C-Atomen (im Folgenden monoethylenisch ungesättigte C₃-C₆-Monocarbonsäuren) wie z. B. Acrylsäure und Methacrylsäure, und deren Salze, insbesondere die Alkalimetall- und Ammoniumsalze;
- Copolymere monoethylenisch ungesättigter C₃-C₆-Monocarbonsäuren mit neutralen Monomeren wie beispielsweise Vinylaromaten wie Styrol, C₁-C₁₀-Alkylester monoethylenisch ungesättigter C₃-C₆-Monocarbonsäuren und/oder C₄-C₆-Dicarbonsäuren wie Methylacrylat, Methylmethacrylat, Ethylacrylat, Ethylmethacrylat, Propylacrylat, Propylmethacrylat, n-Butylacrylat, n-Butylmethacrylat, tert-Butylacrylat, tert-Butylmethacrylat, n-Hexylacrylat, n-Hexylmethacrylat, Hydroxyethylester, insbesondere Hydroxyethyl- und Hydroxypropylester der vorgenannten monoethylenisch ungesättigter C₃-C₆-Monocarbonsäuren und/oder C₄-C₆-Dicarbonsäuren wie Hydroxyethylacrylat, Hydroxyethylmethacrylat, Hydroxypropylacrylat und Hydroxypropylmethacrylat, sowie Vinylester aliphatischer Carbonsäuren wie Vinylacetat und Vinylpropionat;
- Homo- und Copolymere monoethylenisch ungesättigter Sulfonsäuren wie beispielsweise Vinylsulfonsäure, Styrolsulfonsäure, 2-Acrylamid-2-methylpropansulfonsäure, 2-Acryloxyethansulfonsäure, 2-Acryloxypropansulfonsäure etc. sowie deren Copolymere mit den vorgenannten neutralen Monomeren, sowie die Salze der vorgenannten Homo- und Copolymere, insbesondere die Alkalimetall- und Ammoniumsalze;
- Homo- und Copolymere monoethylenisch ungesättigter Phosphonsäuren wie beispielsweise Vinylphosphonsäure, 2-Acrylamido-2-methylpropanphosphonsäure, 2-Acryloxyethanphosphonsäure, 2-Acryloxypropanphosphonsäure etc. sowie deren Copolymere mit den vorgenannten neutralen Monomeren, sowie die Salze der vorgenannten Homo- und Copolymere, insbesondere die Alkalimetallund Ammoniumsalze;
wobei der Anteil der neutralen Comonomere in den vorgenannten Copolymeren in der Regel einen Anteil von 80 Gew.-%, insbesondere 70 Gew.-%, bezogen auf die Gesamtmenge der das Copolymer konstituierenden Monomere, nicht überschreiten wird.

Zu den anionischen wasserlöslichen Polymere, deren Polymerrückgrad eine Vielzahl Sulfonatgruppen aufweist, zählen insbesondere auch
- wasserlösliche Copolyester, die aromatisch gebundene Sulfonsäure- bzw. Sulfonatgruppen in einer Menge von 0,3 bis 1,5 mmol/g, insbesondere 0,5 bis 1,0 mmol/g Polyester aufweisen, und deren Salze, insbesondere deren Alkalimetall- und Ammoniumsalze, wobei die wasserlösliche Copolyester vorzugsweise aufgebaut sind aus:
   i) 6 bis 30 mol-%, bezogen auf die Gesamtmenge der Komponenten i), ii), und iii), wenigstens einer aromatischen Dicarbonsäure, die wenigstens eine Sulfonatgruppe aufweist, und die vorzugweise ausgewählt ist unter 5-Sulfoisophthalsäure oder deren Salzen, insbesondere dem Natriumsalz der Sulfoisopththalsäure, oder deren esterbildenden Derivate;
   ii) gegebenenfalls einer oder mehrerer aromatischer Dicarbonsäure, die keine Sulfonylgruppen aufweist, und die vorzugweise ausgewählt ist unter Terephthalsäure und Isophthalsäure und deren Gemischen, oder deren esterbildenden Derivate;
   iii) gegebenenfalls einer oder mehrerer aliphatischer oder cycloaliphatischer Dicarbonsäuren, oder deren esterbildenden Derivate;
   iv) 95 bis 105 mol-%, bezogen auf die Gesamtmenge der Komponenten i), ii), und iii), einer oder mehrer aliphatischer Diole wie z. B. Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol oder 2,2-Dimethyl- 1,3-propandiol (Neopentylglykol),
   wobei die Gesamtmenge der Komponenten ii) und iii) 70 bis 94 mol-%, bezogen auf die Gesamtmenge der Komponenten i), ii) und iii) ausmacht, wobei die Komponenten i), ii), iii) und iv) in der Regel wenigstens 99 Gew.-% aller esterbildenden Bestandteile des Polyesters ausmachen (bezogen auf die im Polyester enthaltenen Komponenten). Derartige wasserlöslichen Copolyester sind bekannt beispielsweise aus US 6,521,679, auf deren Offenbarung hiermit vollumfänglich Bezug genommen wird.

Gebräuchliche nichtionische Emulgatoren sind z. B. C₂-C₃-alkoxylierte, insbesondere ethoxylierte Mono-, Di- und Tri-Alkylphenole (Ethoxilierungsgrad von 3 bis 50, Alkylrest: C₄ bis C₁₂) sowie C₂-C₃-alkoxylierte, insbesondere ethoxylierte Fettalkohole (Ethoxilierungsgrad von 3 bis 80; Alkylrest: C₈ bis C₃₆). Beispiele hierfür sind die Lutensol® A-Marken (C₁₂ bis C₁₄-Fettalkoholethoxylate, Ethoxilierungsgrad von 3 bis 8), Lutensol® AO-Marken (C₁₃ bis C₁₅-Oxoalkoholethoxylate, Ethoxilierungsgrad von 3 bis 30), Lutensol® AT-Marken (C₁₆ bis C₁₈-Fettalkoholethoxylate, Ethoxilierungsgrad von 11 bis 80), Lutensol® ON-Marken (C10-Oxoalkoholethoxylate, Ethoxilierungsgrad von 3 bis 11) und die Lutensol® TO-Marken (C13-Oxoalkoholethoxylate, Ethoxilierungsgrad von 3 bis 20) der BASF SE.

Übliche anionische Emulgatoren sind die Salze amphiphiler Substanzen, die eine anionische funktionelle Gruppe aufweisen, z. B. eine Sulfonat-, Phosphonat-, Sulfat- oder Phosphatgruppe. Hierzu zählen beispielsweise die Salze, insbesondere die Alkalimetall- und Ammoniumsalze von Alkylsulfaten (Alkylrest: C8 bis C12), die Salze, insbesondere die Alkalimetall- und Ammoniumsalze von amphiphilen Verbindungen, die eine sulfatierte oder phosphatierte Oligo-C₂-C₃-alkylenoxid-Gruppe, insbesondere eine sulfatierte oder phosphatierte Oligoethylenoxid-Gruppe aufweisen, wie beispielsweise die Salze, insbesondere die Alkalimetall- und Ammoniumsalze von Schwefelsäurehalbestern ethoxylierter Alkanole (Ethoxilierungsgrad von 2 bis 50, insbesondere 4 bis 30, Alkylrest: C₁₀ bis C₃₀, insbesondere C₁₂ bis C₁₈) die Salze, insbesondere die Alkalimetall- und Ammoniumsalze von Schwefelsäurehalbestern ethoxylierter Alkylphenole (Ethoxilierungsgrad von 2 bis 50, Alkylrest: C₄ bis C₁₂), die Salze, insbesondere die Alkalimetall- und Ammoniumsalze von Phosphorsäurehalbestern ethoxylierter Alkanole (Ethoxilierungsgrad von 2 bis 50, insbesondere 4 bis 30, Alkylrest: C₁₀ bis C₃₀, insbesondere C₁₂ bis C₁₈) die Salze, insbesondere die Alkalimetall- und Ammoniumsalze von Phosphorsäurehalbestern ethoxylierter Alkylphenole (Ethoxilierungsgrad von 2 bis 50, Alkylrest: C₄ bis C₁₂), die Salze, insbesondere die Alkalimetall- und Ammoniumsalze von Alkylsulfonsäuren (Alkylrest: C₁₂ bis C₁₈), die Salze, insbesondere die Alkalimetall- und Ammoniumsalze von Alkylarylsulfonsäuren (Alkylrest: C₉ bis C₁₈) sowie die Salze, insbesondere die Alkalimetall- und Ammoniumsalze von Alkylbiphenylethersulfonsäuren (Alkylrest: C₆ bis C₁₈) wie z. B. das unter der Bezeichnung Dowfax® 2A1 vertriebene Produkt.

Geeignete kationische Emulgatoren sind in der Regel einen C₆-C₁₈-Alkyl-, C₁-C₁₀-Alkylaryl- oder heterocyclischen Rest aufweisende kationische Salze, zum Beispiel primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze, insbesondere deren Sulfate, Methosulfate, Acetate, Chloride, Bromide, Phosphate, Hexafluorophosphate und dergleichen. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethylammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der BASF Aktiengesellschaft, ca. 12 Ethylenoxideinheiten).

In einer bevorzugten Ausführungsform der Erfindung enthält das wässrige Dispergiermedium wenigstens ein neutrales Schutzkolloid, insbesondere ein neutrales, OH-Gruppen tragendes Schutzkolloid, gegebenenfalls in Kombination mit einem oder mehreren Emulgatoren, vorzugsweise anionischen oder nichtionischen Emulgatoren, insbesondere anionischen Emulgatoren die eine Sulfat- oder Sulfonatgruppe tragen. Beispiele für neutrale, OH-Gruppen tragende Schutzkolloide sind Polysaccharide, z. B. wasserlösliche Stärken, Stärkederivate und Cellulosederivate wie Methylcellulose, Hydroxypropylcellulose, Hydroxyethylcellulose, Hydroxypropylmethylcellulose, Carboxymethylcellulose, weiterhin Polyvinylalkohole, einschließlich teilverseiftem Polyvinylacetat mit einem Verseifungsgrad von vorzugsweise wenigstens 40 %, insbesondere wenigstens 60 %. Insbesondere ist das neutrale, OH-Gruppen tragenden Schutzkolloid unter Polyvinylalkoholen, einschließlich teilverseiften Polyvinylacetaten mit einem Verseifungsgrad von vorzugsweise wenigstens 40 %, insbesondere wenigstens 60 %, ausgewählt.

In einer weiteren bevorzugten Ausführungsform der Erfindung enthält das wässrige Dispergiermedium wenigstens ein anionisches Schutzkolloid, gegebenenfalls in Kombination mit einem oder mehreren nichtionischen Schutzkolloiden und/oder einem oder mehreren Emulgatoren, vorzugsweise einem oder mehreren nichtionischen und/oder einem anionischen Emulgatoren. Geeignete anionische Schutzkolloide sind die vorgenannten anionischen wasserlöslichen Polymere, deren Polymerrückgrad eine Vielzahl Carboxylgruppen, Sulfonsäure- bzw. Sulfonatgruppen und/order Phosphonsäure- oder Phosphonatgruppen aufweist, und deren Salze, insbesondere deren Alkalimetall- und Ammoniumsalze. Hierunter bevorzugt sind insbesondere:
- Homo- und Copolymere monoethylenisch ungesättigter C₃-C₆-Monocarbonsäuren wie z. B. Acrylsäure oder Methacrylsäure, und deren Salze, insbesondere die Alkalimetall- und Ammoniumsalze;
- Salze, insbesondere die Alkalimetall- und Ammoniumsalze, von Copolymeren monoethylenisch ungesättigter C₃-C₆-Monocarbonsäuren mit neutralen Monomeren wie beispielsweise Vinylaromaten wie Styrol, C₁-C₁₀-Alkylester monoethylenisch ungesättigter C₃-C₆-Monocarbonsäuren und/oder C₄-C₆-Dicarbonsäuren wie Methylacrylat, Methylmethacrylat, Ethylacrylat, Ethylmethacrylat, Propylacrylat, Propylmethacrylat, n-Butylacrylat, n-Butylmethacrylat, tert-Butylacrylat, tert-Butylmethacrylat, n-Hexylacrylat, n-Hexylmethacrylat, Hydroxyethylester, insbesondere Hydroxyethyl- und Hydroxypropylester der vorgenannten monoethylenisch ungesättigter C₃-C₆-Monocarbonsäuren und/oder C₄-C₆-Dicarbonsäuren wie Hydroxyethylacrylat, Hydroxyethylmethacrylat, Hydroxypropylacrylat und Hydroxypropylmethacrylat, sowie Vinylester aliphatischer Carbonsäuren wie Vinylacetat und Vinylpropionat, wobei der Anteil der neutralen Comonomere in den vorgenannten Comonomeren in der Regel einen Anteil an 80 Gew.-%, insbesondere 70 Gew.-%, bezogen auf die Gesamtmenge der das Copolymer konstituierenden Monomere, nicht überschreiten wird, sowie die Salze der vorgenannten Copolymere, insbesondere die Alkalimetall- und Ammoniumsalze;
- Homo- und Copolymere monoethylenisch ungesättigter Sulfonsäuren wie beispielsweise Vinylsulfonsäure, Styrolsulfonsäure, 2-Acrylamid-2-methylpropansulfonsäure, 2-Acryloxyethansulfonsäure, 2-Acryloxypropansulfonsäure etc. sowie deren Copolymere mit den vorgenannten neutralen Monomeren, sowie die Salze der vorgenannten Homo- und Copolymere, insbesondere die Alkalimetallund Ammoniumsalze;
- anionisch modifizierte Stärken;
- wasserlösliche Copolyester, die aromatisch gebundene Sulfonsäure- bzw. Sulfonatgruppen in einer Menge von 0,3 bis 1,5 mmol/g, insbesondere 0,5 bis 1,0 mmol/g Polyester aufweisen, und deren Salze, insbesondere deren Alkalimetall- und Ammoniumsalze, wobei die wasserlösliche Copolyester vorzugsweise aufgebaut sind aus:
   i) 6 bis 30 mol-%, bezogen auf die Gesamtmenge der Komponenten i), ii), und iii), wenigstens einer aromatischen Dicarbonsäure, die wenigstens eine Sulfonatgruppe aufweist, und die vorzugweise ausgewählt ist unter 5-Sulfoisophthalsäure oder deren Salzen, insbesondere dem Natriumsalz der Sulfoisopthalsäure, oder deren esterbildenden Derivate;
   ii) gegebenenfalls einer oder mehrerer aromatischer Dicarbonsäure, die keine Sulfonylgruppen aufweist, und die vorzugweise ausgewählt ist unter Terephthalsäure und Isophthalsäure und deren Gemischen, oder deren esterbildenden Derivate;
   iii) gegebenenfalls einer oder mehrerer aliphatischer oder cycloaliphatischer Dicarbonsäuren, oder deren esterbildenden Derivate;
   iv) 95 bis 105 mol-%, bezogen auf die Gesamtmenge der Komponenten i), ii), und iii), einer oder mehrerer aliphatischer Diole wie z. B. Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol oder 2,2-Dimethyl-1,3-propandiol (Neopentylglykol),
   wobei die Gesamtmenge der Komponenten ii) und iii) 70 bis 94 mol-%, bezogen auf die Gesamtmenge der Komponenten i), ii) und iii) ausmacht, wobei die Komponenten i), ii), iii) und iv) in der Regel wenigstens 99 Gew.-% aller esterbildenden Bestandteile des Polyesters ausmachen (bezogen auf die im Polyester enthaltenen Komponenten). Derartige wasserlöslichen Copolyester sind bekannt beispielsweise aus US 6,521,679, auf deren Offenbarung hiermit vollumfänglich Bezug genommen wird.

Besonders bevorzugte anionische Schutzkolloide sind solche, die im Polymerrückgrat Sulfonsäure- bzw. Sulfonatgruppen aufweisen, insbesondere die zuvor genannten wasserlöslichen Copolyester und deren Salze.

In einer dritten, ebenfalls bevorzugten Ausführungsform der Erfindung umfasst die in dem wässrigen Dispergiermedium enthaltene oberflächenaktive Substanz wenigstens einen anionischen Emulgator, der eine sulfatierte oder eine phosphatierte Oligo-C₂-C₃-alkylenoxid-Gruppe, insbesondere eine sulfatierte oder eine phosphatierte Oligoethylenoxid-Gruppe aufweist, vorzugsweise in Form eines Alkalimetall- oder Ammoniumsalzes. In diesen Emulgatoren weist die Oligo-C₂-C₃-alkylenoxid-Gruppe vorzugsweise 2 bis 50, insbesondere 4 bis 30 C₂-C₃-Alkylenoxid-Wiederholungseinheiten auf (Zahlenmittel), wobei vorzugsweise wenigstens 50 % und insbesondere alle C₂-C₃-Alkylenoxid-Wiederholungseinheiten von Ethylenoxid abgeleitet sind. Hierzu zählen beispielsweise die Salze, insbesondere die Alkalimetall- und Ammoniumsalze von Schwefelsäurehalbestern ethoxylierter Alkanole (Ethoxilierungsgrad von 2 bis 50, insbesondere 4 bis 30, Alkylrest: C₁₀ bis C₃₀, insbesondere C₁₂ bis C₁₈), die Salze, insbesondere die Alkalimetall- und Ammoniumsalze von Schwefelsäurehalbestern ethoxylierter Alkylphenole (Ethoxilierungsgrad von 2 bis 50, Alkylrest: C₄ bis C₁₂), die Salze, insbesondere die Alkalimetall- und Ammoniumsalze von Phosphorsäurehalbestern ethoxylierter Alkanole (Ethoxilierungsgrad von 2 bis 50, insbesondere 4 bis 30, Alkylrest: C₁₀ bis C₃₀, insbesondere C₁₂ bis C₁₈) die Salze, insbesondere die Alkalimetall- und Ammoniumsalze von Phosphorsäurehalbestern ethoxylierter Alkylphenole (Ethoxilierungsgrad von 2 bis 50, Alkylrest: C₄ bis C₁₂). Hierunter sind insbesondere solche Emulgatoren bevorzugt, die eine sulfatierte Oligo-C₂-C₄-alkylenoxid-Gruppe und speziell eine sulfatierte Oligoethylenoxid-Gruppe aufweisen, vorzugsweise in Form eines Alkalimetall- oder Ammoniumsalzes.

Hierunter besonders bevorzugt sind die Salze, insbesondere die Alkalimetall- und Ammoniumsalze von Schwefelsäurehalbestern ethoxylierter Alkanole, die einen Ethoxilierungsgrad von 2 bis 50, insbesondere 4 bis 30 aufweisen und der dem Alkanol zugrundeliegende Alkylrest linear oder verzweigt ist und 10 bis 30 und insbesondere 12 bis 18 C-Atome aufweist.

In dieser dritten, ebenfalls bevorzugten Ausführungsform der Erfindung handelt es sich bei der in dem wässrigen Dispergiermedium enthaltenen oberflächenaktive Substanz vorzugsweise um wenigstens einen anionischen Emulgator, der eine sulfatierte oder eine phosphatierte Oligo-C₂-C₃-alkylenoxid-Gruppe, insbesondere eine sulfatierte oder eine phosphatierte Oligoethylenoxid-Gruppe aufweist,
oder um eine Kombination von wenigstens einem derartigen anionischen Emulgator mit einem oder mehreren nichtionischen Emulgatoren,
oder um eine Kombination von wenigstens einem derartigen anionischen Emulgator mit einem davon verschiedenen anionischen Emulgator, gegebenenfalls in Kombination mit einem oder mehreren nichtionischen Emulgatoren,
oder um eine Kombination von wenigstens einem derartigen anionischen Emulgator mit einem oder mehreren nichtionischen Schutzkolloiden, insbesondere wenigstens einem der dort als bevorzugt angegebenen, OH-Gruppen enthaltenden Schutzkolloide, speziell mit einem Polyvinylalkohol oder einem teilverseiften Polyvinylacetat,
oder um eine Kombination von wenigstens einem derartigen anionischen Emulgator mit einem oder mehreren der vorgenannten anionischen Schutzkolloiden, insbesondere solchen, die Sulfonat- oder Phosphonatgruppen aufweisen.

In dieser dritten, ebenfalls bevorzugten Ausführungsform der Erfindung handelt es sich bei der in dem wässrigen Dispergiermedium enthaltenen oberflächenaktive Substanz besonders bevorzugt um eine Kombination wenigstens eines anionischen Emulgators, der eine sulfatierte oder eine phosphatierte Oligo-C₂-C₃-alkylenoxid-Gruppe, insbesondere eine sulfatierte oder eine phosphatierte Oligoethylenoxid-Gruppe aufweist, mit einem oder mehreren nichtionischen Schutzkolloiden, insbesondere wenigstens einem der dort als bevorzugt angegebenen, OH-Gruppen enthaltendem Schutzkolloide, speziell mit einem Polyvinylalkohol oder einem teilverseiften Polyvinylacetat.

In der Regel enthält das wässrige Dispergiermedium die oberflächenaktive Substanz in einer Konzentration von 0,5 bis 20 Gew.-%, häufig in einer Konzentration von 1 bis 15 Gew.-%, insbesondere in einer Konzentration von 1 bis 10 Gew.-%, bezogen auf das wässrige Dispergiermedium.

Das wässrige Dispergiermittel kann neben Wasser und der wenigstens einen oberflächenaktiven Substanz geringe Mengen weiterer Bestandteile enthalten, beispielsweise Entschäumer. Der Anteil an von Wasser und oberflächenaktiver Substanz verschiedener Bestandteile wird in der Regel 5 Gew.-%, insbesondere 1 Gew.-% des wässrigen Dispergiermittels nicht überschreiten. Das wässrige Dispergiermittel enthält vorzugsweise keine oder keine nennenswerten Mengen an flüchtigen organischen Lösungsmitteln. Insbesondere beträgt der Gehalt an flüchtigen organischen Lösungsmitteln weniger als 1 Gew.-%, insbesondere weniger als 5000 ppm und speziell weniger als 1000 ppm. Unter flüchtigen organischen Lösungsmitteln versteht man solche organischen Lösungsmittel, die bei Normaldruck einen Siedepunkt unterhalb 250 °C aufweisen.

Das erfindungsgemäße Verfahren lässt sich grundsätzlich auf alle Polymere, welche eine Vielzahl an Estergruppen im Polymerrückgrad aufweisen, anwenden. Es hat sich insbesondere für solche Polymere bewährt, die sich nach den Methoden des Standes der Technik nicht oder nur unter Verwendung von organischen Lösungsmitteln oder Additiven, welche die Viskosität der Polymere verringern, in wässrige Dispersionen überführen lassen.

Derartige Polymere sind zum einen durch eine hohe Nullscherviskosität η₀, die bei 180 °C in der Regel wenigstens 60 Pa·s, häufig wenigstens 80 Pa·s, insbesondere wenigstens 100 Pa·s, z. B. 60 bis 20000 Pa·ss, insbesondere 80 bis 15000 Pa·s und speziell 100 bis 10000 Pa·s beträgt, und durch eine geringe Säurezahl von weniger als 5 mg KOH/ g Polymer, insbesondere maximal 3 mg KOH/g Polymer und speziell maximal 1 mg KOH/ g Polymer bestimmt. Bei den hier angegebenen Säurezahlen handelt es sich um die Säurezahl nach DIN EN 12634.

Ferner weisen naturgemäß die erfindungsgemäßen Polymere im Wesentlichen keine funktionellen Gruppen auf, die den Polymeren eine Wasserlöslichkeit verleihen. Dementsprechend beträgt die Anzahl an Sulfonsäuregruppen im Polymer in der Regel weniger als 0,2 mmol/g, häufig weniger als 0,1 mmol/g, insbesondere weniger als 0,05 mmol/g oder weniger als 0,01 mmol/g Polymer. In einer bevorzugten Ausführungsform der Erfindung weisen die Polymere 0,01 bis 0,2 mmol/g, insbesondere 0,05 bis 1,5 mmol/g Sulfonsäuregruppen auf. In einer anderen Ausführungsform der Erfindung weisen die Polymere weniger as 0,05 mmol/g, insbesondere weniger als 0,01 mmol/g Sulfonsäuregruppen auf.

Unter der Nullscherviskosität η₀ bei 180 °C, im Folgenden auch kurz η₀ (180 °C) versteht man den Grenzwert der dynamischen Viskosität des Polymeren bei einem Schergeschwindigkeit von 0 und einer Temperatur von 180 °C. Dieser Wert lässt sich gemäß DIN 53019-2 aus der durch dynamische Viskositätsmessungen bei 180 °C bei unterschiedlichen Schergeschwindigkeiten gewonnenen Viskositätskurve durch Extrapolation der Viskositätskurve auf eine Scherrate von 0 ermitteln. Beispielsweise kann man solche Viskositätskurven mittels dynamischer Viskositätsmessung mit oszillatorischer Scherung mit geringer Amplitude bei Scherraten im Bereich von 0,01 bis 500 s⁻¹ ermitteln.

Die Säurezahl kann in an sich bekannter Weise durch Titration einer Lösung des Polymeren in einem geeigneten Lösungsmittel wie Tetrahydrofuran, Pyridin oder Toluol mit verdünnter ethanolischer KOH-Lösung (z. B. 0,1 N) bestimmt werden.

Die im erfindungsgemäßen Verfahren eingesetzten Polymere weisen typischerweise ein zahlenmittleres Molekulargewicht M_{N} im Bereich von 5000 bis 1000000 Dalton, insbesondere im Bereich von 8000 bis 800000 Dalton und speziell im Bereich von 10000 bis 500000 Dalton auf. Das gewichtsmittlere Molekulargewicht Mw des Polymers liegt in der Regel im Bereich von 20000 bis 5000000 Dalton, häufig im Bereich von 30000 Dalton bis 4000000 Dalton und insbesondere im Bereich von 40000 bis 2500000 Dalton. Der Polydispersitätsindex M_{W}/M_{N} beträgt in der Regel wenigstens 2 und liegt häufig im Bereich von 3 bis 20, insbesondere im Bereich von 5 bis 15. Molekulargewicht und Polydispersitätsindex können beispielsweise durch Gelpermeationschromatographie (GPC) gemäß DIN 55672-1 bestimmt werden.

Die Viskositätszahl der Polymere, die indirekt ein Maß für das Molekulargewicht ist, liegt typischerweise im Bereich von 50 bis 500 ml/g, häufig im Bereich von 80 bis 300 ml/g und insbesondere im Bereich von 100 bis 250 ml/g auf (bestimmt nach EN ISO 1628-1 bei 25 °C an einer 0,5 gew.-%igen Lösung des Polymeren in o-Dichlorbenzol/Phenol (1:1 w/w)).

Beispiele für Polymere, die eine Vielzahl an Ester- und/oder Carbonatgruppen im Polymerrückgrat aufweisen sind Polyester, Polyesteramide, Polyetherester, Polycarbonate und Polyestercarbonate. Vorzugsweise ist das im erfindungsgemäßen Verfahren verwendete Polymer ausgewählt ist aus der Gruppe der Polyester, Polyesteramide und Polyetherester und deren Gemischen. Insbesondere handelt es sich bei den Polymeren um einen Polyester, ein Gemisch von verschiedenen Polyestern oder ein Gemisch von wenigstens einem Polyester mit einem Polymer aus der Gruppe der Polyesteramide und Polyetherester.

Die im erfindungsgemäßen Verfahren eingesetzten Polymere können amorph oder teilkristallin sein.

In einer erfindungsgemäßen Ausführungsform der Erfindung ist das Polymer verzweigt, wobei der Verzweigungsgrad vorzugsweise einen Wert von 1 mol/kg, insbesondere 0,5 mol/kg und speziell 0,3 mol/kg nicht überschreitet. Unter dem Verzweigungsgrad versteht man die Anzahl der einkondensierten Monomereinheiten, die mehr als 2, z. B. 3, 4, 5 oder 6 zur Kondensation geeignete funktionelle Gruppen, die mit Carbonsäureoder Hydroxylgruppen unter Bindungsbildung reagieren, z. B. Carboxylat, OH, Isocyanat (NCO) oder NH₂-Gruppen (oder Ester- bzw. Amid-bildende Derivate davon) aufweisen. In dieser Ausführungsform weist das Polymer einen Verzweigungsgrad von in der Regel 0,0005 bis 1 mol/kg vorzugsweise 0,001 bis 0,5 mol/kg und insbesondere 0,005 bis 0,3 mol/kg auf. Derartige Polymere lassen sich überraschenderweise besser dispergieren als solche, die bei an sich gleicher Nullscherungsviskosität unverzweigt sind.

In einer anderen erfindungsgemäßen Ausführungsform der Erfindung ist das Polymer im Wesentlichen unverzweigt, d. h. der Verzweigungsgrad weist in der Regel einen Wert von < 0,005 mol/kg, insbesondere < 0,001 mol/kg und speziell < 0,0005 mol/kg auf.

Insbesondere ist das Polymer ausgewählt ist aus der Gruppe der aliphatischen Polyester, aliphatischen Copolyester, aliphatisch-aromatischen Copolyester und deren Gemischen.

Unter einem aliphatischen Polyester versteht man einen Polyester der ausschließlich aus aliphatischen Monomeren aufgebaut ist. Unter einem aliphatischen Copolyester versteht man einen Polyester, der ausschließlich aus wenigstens zwei, insbesondere wenigstens drei aliphatischen Monomeren aufgebaut ist, wobei die Säurekomponente und/oder die Alkoholkomponente vorzugsweise wenigstens zwei voneinander verschiedene Monomere umfasst. Unter einem aliphatisch-aromatischen Copolyester versteht man einen Polyester, der sowohl aus aliphatischen Monomeren als auch aus aromatischen Monomeren aufgebaut ist, wobei vorzugsweise die Säurekomponente wenigstens eine aliphatische Säure und wenigstens eine aromatische Säure umfasst.

Unter den aliphatischen Polyestern und Copolyestern sind insbesondere Polylactide, Polycaprolacton, Blockcopolymere aus Polylactid mit Poly-C₂-C₄-alkylenglykol, Blockcopolymere aus Polycaprolacton mit Poly-C₂-C₄-alkylenglykol sowie die im Folgenden definierten Copolyester, die aus mindestens einer aliphatischen oder cycloaliphatischen Dicarbonsäure oder einem esterbildenden Derivat davon und mindestens einer aliphatischen oder cycloaliphatischen Diolkomponente sowie gegebenenfalls weiteren Komponenten aufgebaut sind, zu verstehen.

Unter dem Begriff "Polylactide" sind Polykondensationsprodukten der Milchsaure zu verstehen. Geeignete Polylactide sind in WO 97/41836, WO 96/18591,
WO 94/05484,US 5,310,865, US 5,428,126, US 5,440,008, US 5,142,023,
US 5,247,058, US 5,247,059, US 5,484,881, WO 98/09613, US 4,045,418,
US 4,057,537 sowie in Adv. Mater. 2000, 12, 1841-1846 beschrieben. Bei diesen Produkten handelt es sich um Polymere auf Basis von Lactidsäure-Lacton (A), das durch Ringöffnungspolymerisation in Polylactidsäure-Polymere (B) überführt wird:

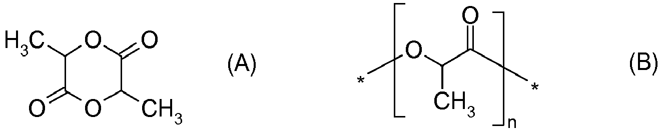

Der Polymerisationsgrad n in Formel (B) liegt im Bereich von 1000 bis 4000, bevorzugt von 1500 bis 3500 und besonders bevorzugt von 1500 bis 2000 (Zahlenmittel). Die durchschnittlichen Molmassen (Zahlenmittel) dieser Produkte liegen entsprechend dem Polymerisationsgrad im Bereich von 71.000 bis 284.000 g/mol. Geeignete Polylactide sind z. B. von der Firma Cargill Dow LLC (z. B. PLA Polymer 404ID, PLA Polymer 4040D, PLA Polymer 4031D, PLA Polymer 2000D oder PLA Polymer 1100) oder von der Firma Mitsui Chemicals (Lactea) erhältlich. Geeignet sind auch Diblock- und Triblockcopolymere von Polylaktiden mit Poly-C₂-C₄-alkylenglykol, insbesondere mit Poly(ethylenglycol). Diese Blockcopolymere werden zum Beispiel von der Firma Aldrich vertrieben (z. B. Produktnummer 659649). Hierbei handelt es sich um Polymere die Polylactid-Blöcke und Poly-C₂-C₄-alkylenoxid-Blöcke aufweisen. Derartige Blockcopolymere sind z. B. durch Kondensation von Milchsäure oder durch Ringöffnungspolymerisation von Lactidsäure-Lacton (A) in Gegenwart von Poly-C₂-C₄-alkylenglykolen erhältlich.

Erfindungsgemäß geeignete Polymere sind auch Polycaprolactone. Hierunter versteht der Fachmann, Polymere, welche durch die im Folgenden gezeigte Formel D beschrieben werden, wobei n die Anzahl an Wiederholungseinheiten im Polymer, d. h. den Polymerisationsgrad bedeutet.

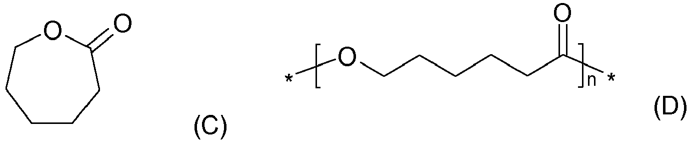

Der Polymerisationsgrad n in Formel (D) liegt im Bereich von 100 bis 1000, bevorzugt 500 bis 1000 (Zahlenmittel). Die zahlenmittleren Molekulargewichte dieser Produkte liegen entsprechend dem Polymerisationsgrad im Bereich von 10000 g/mol bis 100000 g/mol. Besonders bevorzugte Polymere der Formel (D) haben durchschnittliche Molmassen (Zahlenmittel) von 50000 g/mol (CAPA 6500), 80000 g/mol (CAPA 6800) und 100000 g/mol (CAPA FB 100). Polycaprolactone werden in der Regel durch ringöffnende Polymerisation von ε-Caprolacton (Verbindung C) in Gegenwart eines Katalysators hergestellt. Polycaprolactone sind von der Firma Solvay unter der Bezeichnung CAPA Polymere, z. B. CAPA 6100, 6250, 6500 oder CAPA FB 100, kommerziell erhältlich. Geeignete Polymere sind weiterhin Diblock- und Triblockcopolymere von Polycaprolacton mit Poly-C₂-C₄-alkylenglykolen insbesondere mit Polyethylenglykolen (= Polyethylenoxiden), d. h. Polymere die wenigstens einen Polycaprolacton-Block der Formel D und wenigstens einen Polyalkylenglykol-Block aufweisen. Derartige Polymere können z. B. durch Polymerisation von Caprolacton in Gegenwart von Polyalkylenglykolen, beispielsweise analog zu den Macromolecules 2003, 36, pp 8825-8829 beschriebenen Verfahren, hergestellt werden.

Erfindungsgemäß geeignete Polymere sind insbesondere Copolyester, die aus mindestens einer aliphatischen oder cycloaliphatischen Dicarbonsäure oder einem esterbildenden Derivat davon und mindestens einer aliphatischen oder cycloaliphatischen Diolkomponente sowie gegebenenfalls weiteren Komponenten aufgebaut sind. Insbesondere handelt es sich bei dem erfindungsgemäß zu dispergierenden Polymer um einen aliphatischen oder aliphatisch-aromatischen Copolyester, der im Wesentlichen aufgebaut ist aus:
a) wenigstens einer Dicarbonsäurekomponente A, die aus
   a1) wenigstens einer aliphatischen oder cycloaliphatischen Dicarbonsäure oder deren esterbildenden Derivaten oder Mischungen davon und
   a2) gegebenenfalls einer oder mehreren aromatischen Dicarbonsäuren oder deren esterbildenden Derivaten oder Mischungen davon besteht;
b) wenigstens einer Diolkomponente B, die unter aliphatischen und cycloaliphatischen Diolen und deren Gemischen ausgewählt ist;
c) gegebenenfalls einer oder mehreren weiteren bifunktionellen Verbindungen C, die mit Carbonsäure- oder Hydroxylgruppen unter Bindungsbildung reagieren; und
d) gegebenenfalls einer oder mehreren Verbindungen D, die wenigstens 3 Funktionalitäten aufweisen, welche mit Carbonsäure- oder Hydroxylgruppen unter Bindungsbildung reagieren;
wobei die Verbindungen a1), a2), B), C) und D) entweder keine Sulfonsäuregruppe aufweisen
oder die Verbindungen aus den Gruppen a1), a2), B), C) und D) bis zu 3 mol-%, z.B. 0,1 bis 3 mol-% oder 0,1 bis 2 mol-% oder 0,2 bis 1,5 mol-%, bezogen auf die Gesamtmenge an Verbindungen der Komponente A, wenigstens eine Verbindung umfassen, die eine oder mehrere Sulfonsäuregruppen aufweisen,
wobei die das Molverhältnis der Komponente A zur Komponente B im Bereich von 0,4 : 1 bis 1 : 1, insbesondere im Bereich von 0,6 : 1 bis 0,99 : 1 liegt und die Komponenten A und B wenigstens 80 Gew.-%, insbesondere wenigstens 90 Gew.-% und speziell wenigstens 96 Gew.-% aller esterbildenden Bestandteile des Polyesters bzw. des Gesamtgewicht des Polyesters ausmachen.

Hier und im folgenden beziehen sich die auf die esterbildenden Bestandteile bezogenen Angaben in Gewichts-% auf die Bestandteile der Komponenten A, B, C und D in einkondensierter Form und somit auf die Gesamtmasse des Polyesters, und nicht auf die zur Herstellung des Polyesters eingesetzten Mengen, sofern nichts anderes gesagt wird.

In diesen Copolyestern umfasst die Säurekomponente A vorzugsweise
a1) 30 bis 100 Mol-%, insbesondere 35 bis 90 Mol-% oder 40 bis 90 Mol-% mindestens einer aliphatischen oder mindestens einer cycloaliphatischen Dicarbonsäure oder deren esterbildende Derivate oder Mischungen davon,
a2) 0 bis 70 Mol-%, insbesondere 10 bis 65 Mol-% oder 10 bis 60 Mol-% mindestens einer aromatischen Dicarbonsäure oder deren esterbildendem Derivat oder Mischungen davon,
wobei die Molprozente der Komponenten a1) und a2) zusammen 100 % ergeben.

In einer speziellen Ausführungsform der Erfindung umfasst die Säurekomponente A
a1) 35 bis 90 Mol-% oder 40 bis 90 Mol-% und speziell 60 bis 90 Mol-% mindestens einer aliphatischen oder mindestens einer cycloaliphatischen Dicarbonsäure oder deren esterbildende Derivate oder Mischungen davon,
a2) 10 bis 65 Mol-% oder 10 bis 60 Mol-% und speziell 10 bis 40 Mol-% mindestens einer aromatischen Dicarbonsäure oder deren esterbildendem Derivat oder Mischungen davon,
wobei die Molprozente der Komponenten a1) und a2) zusammen 100 % ergeben.

Die Säurekomponente A kann auch geringe Mengen einer sulfonierten Carbonsäure, insbesondere einer sulfonierten aromatischen Dicarbonsäure z. B. Sulfoisophthalsäure oder ein Salz davon, einkondensiert enthalten, wobei der Anteil der sulfonierten Carbonsäure in der Regel in der Regel nicht mehr als 3 mol-% beträgt und z.B. im Bereich von 0,1 bis 3 mol-% oder 0,1 bis 2 mol-% oder 0,2 bis 1,5 mol-%, bezogen auf die Gesamtmenge an Verbindungen der Komponente A, liegt. In einer Ausführungsform der Erfindung beträgt die Menge an sulfonierten Carbonsäuren weniger als 1 mol-%, insbesondere weniger als 0,5 Mol-%, bezogen auf die Komponente A.

In einer bevorzugten Ausführungsform der Erfindung weisen derartige Copolyester 0,01 bis 0,2 mmol/g, insbesondere 0,05 bis 1,5 mmol/g Sulfonsäuregruppen auf. In einer anderen Ausführungsform der Erfindung weisen derartige Copolyester weniger as 0,05 mmol/g, insbesondere weniger als 0,01 mmol/g Sulfonsäuregruppen auf.

Erfindungsgemäß geeignete aliphatische Dicarbonsäuren a1) haben im Allgemeinen 2 bis 10 Kohlenstoffatome, vorzugsweise 4 bis 8 und insbesondere 6 Kohlenstoffatome. Sie können sowohl linear als auch verzweigt sein. Die im Rahmen der vorliegenden Erfindung verwendbaren cycloaliphatischen Dicarbonsäuren sind in der Regel solche mit 7 bis 10 Kohlenstoffatomen und insbesondere solche mit 8 Kohlenstoffatomen. Prinzipiell können jedoch auch Dicarbonsäuren mit einer größeren Anzahl an Kohlenstoffatomen, beispielsweise mit bis zu 30 Kohlenstoffatomen, eingesetzt werden. Beispielhaft zu nennen sind: Malonsäure, Bernsteinsäure, Glutarsäure, 2-Methylglutarsäure, 3-Methylglutarsäure, Adipinsäure, Pimelinsäure, Acelainsäure, Sebacinsäure, Fumarsäure, 2,2-Dimethylglutarsäure, Suberinsäure, 1,3-Cyclopentandicarbonsäure, 1,4-Cyclohexandicarbonsäure, 1,3-Cyclohexandicarbonsäure, Diglykolsäure, Itaconsäure, Maleinsäure und 2,5-Norbornandicarbonsäure. Als esterbildende Derivate der oben genannten aliphatischen oder cycloaliphatischen Dicarbonsäuren, die ebenso verwendbar sind, sind insbesondere die Di-C₁- bis C₆-Alkylester, wie Dimethyl-, Diethyl-, Di-n-propyl-, Diisopropyl-, Di-n-butyl-, Di-iso-butyl, Di-t-butyl-, Di-n-pentyl-, Di-iso-pentyl- oder Di-n-hexylester zu nennen. Anhydride der Dicarbonsäuren können ebenfalls eingesetzt werden. Bevorzugte Dicarbonsäuren sind Bernsteinsäure, Adipinsäure, Sebazinsäure, Azelainsäure und Brassylsäure sowie deren jeweilige esterbildende Derivate oder Mischungen davon. Besonders bevorzugt werden Adipinsäure, Sebazinsäure oder Bernsteinsäure sowie deren jeweilige esterbildende Derivate oder Mischungen davon.

Als aromatische Dicarbonsäuren a2 sind im Allgemeinen solche mit 8 bis 12 Kohlenstoffatomen und vorzugsweise solche mit 8 Kohlenstoffatomen zu nennen. Beispielhaft erwähnt seien Terephthalsäure, Isophthalsäure, 2,6-Naphthoesäure und 1,5-Naphthoesäure sowie esterbildende Derivate davon. Dabei sind insbesondere die Di-C₁-C₆-Alkylester, z. B. Dimethyl-, Diethyl-, Diethyl-, Di-n-propyl-, Diisopropyl-, Di-n-butyl-, Di-iso-butyl, Di-t-butyl-, Di-n-pentyl-, Di-iso-pentyl- oder Di-n-hexylester zu nennen. Die Anhydride der Dicarbonsäuren a2 sind ebenso geeignete esterbildende Derivate. Prinzipiell können jedoch auch aromatische Dicarbonsäuren a2 mit einer größeren Anzahl an Kohlenstoffatomen, beispielsweise bis zu 20 Kohlenstoffatomen, eingesetzt werden. Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Zu den aromatische Dicarbonsäuren und deren esterbildenden Derivaten zählen vor allem solche, die keine Sulfonsäuregruppen aufweisen. Diese werden hier und im Folgenden auch als aromatische Dicarbonsäuren a2.1 bezeichnet. Zu den aromatischen Sulfonsäuren zählen auch sulfonierte aromatische Dicarbonsäuren und deren esterbildende Derivate (aromatische Dicarbonsäuren a2.2). Diese sind typischerweise von den vorgenannten aromatischen Dicarbonsäuren abgeleitet und tragen 1 oder 2 Sulfonsäuregruppen. Beispielhaft zu nennen ist Sulfoisophthalsäure oder ein Salz davon z.B. das Natriumsalz (Nasip). Der Anteil der sulfonierten Carbonsäure macht in der Regel nicht mehr als 3 mol-%, bezogen auf die Komponente A aus und liegt z.B. im Bereich von 0,1 bis 3 mol-% oder 0,1 bis 2 mol-% oder 0,2 bis 1,5 mol-%, bezogen auf die Gesamtmenge an Verbindungen der Komponente A, liegt. In einer Ausführungsform der Erfindung beträgt die Menge an sulfonierten Carbonsäuren weniger als 1 mol-%, insbesondere weniger als 0,5 Mol-%, bezogen auf die Komponente A.

Im Allgemeinen werden die Diole B unter verzweigten oder linearen Alkandiolen mit 2 bis 12 Kohlenstoffatomen, bevorzugt 4 bis 8 oder insbesondere 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl-1,3-propandiol, 2,2,4-Trimethyl-1,6-hexandiol, insbesondere Ethylenglykol, 1,3-Propandiol, 1,4-Butandiol und 2,2-Dimethyl-1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Es können auch Mischungen unterschiedlicher Alkandiole verwendet werden. In diesen Copolyestern ist die Diolkomponente B vorzugsweise ausgewählt unter C₂-C₁₂-Alkandiolen und Mischungen davon. Bevorzugt werden 1,3-Propandiol und insbesondere 1,4-Butandiol.

Abhängig davon ob ein Überschuss an OH-Endgruppen gewünscht wird, kann die Komponente B im Überschuss eingesetzt werden. Nach einer bevorzugten Ausführungsform kann das Molverhältnis der eingesetzten Komponenten A zu B im Bereich von 0,4 : 1 bis 1,1 : 1, bevorzugt im Bereich von 0,6 : 1 bis 1,05 : 1 liegen und insbesondere im Bereich von 0,7 : 1 bis 1,02 : 1. Vorzugsweise liegt das Mol-Verhältnis der in das Polymer eingebauten Komponente A zu der in das Polymer eingebauten Komponente B im Bereich von 0,8 : 1 bis 1,01 : 1, bevorzugt im Bereich von 0,9 : 1 bis 1 : 1 liegen und insbesondere im Bereich von 0,99 : 1 bis 1 : 1.

Neben den Komponenten A und B können die Polyester weitere bifunktionelle Komponenten C einkondensiert enthalten. Diese bifunktionellen Verbindungen weisen zwei funktionelle Gruppen auf, welche mit Carbonsäuregruppen oder vorzugsweise Hydroxylgruppen unter Bindungsbildung reagieren. Beispiele für funktionelle Gruppen, welche mit OH-Gruppen reagieren sind insbesondere Isocyanatgruppen, Epoxid-Gruppen, Oxazolingruppen, Carboxylgruppen in freier oder veresterter Form und Amidgruppen. Funktionelle Gruppen, welche mit Carboxylgruppen reagieren, sind insbesondere Hydroxylgruppen und primäre Aminogruppen. Hierbei handelt es sich um insbesondere um sogenannte bifunktionelle Kettenverlängerer, insbesondere die Verbindungen der Gruppen c3) bis c7). Zu den Komponenten C zählen:
c1) Dihydroxyverbindungen der Formel I

   HO-[(A)-O]ₘ-H (I)

   worin A für eine C₂-C₄-Alkyleneinheit wie 1,2-Ethandiyl, 1,2-Propandiyl, 1,3-Propandiyl oder 1,4-Butandiyl steht, und m für eine ganze Zahl von 2 bis 250 steht;
c2) Hydroxycarbonsäuren der Formel IIa oder IIb 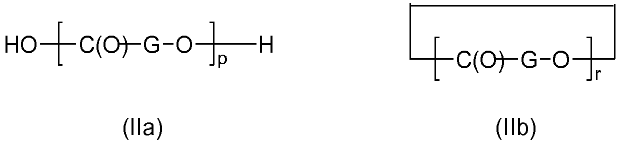 worin p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H-und -C(R)HCH₂, wobei R für Methyl oder Ethyl steht;
c3) Amino-C₂-C₁₂-alkanole, Amino-C₅-C₁₀-cycloalkanole oder Mischungen davon;
c4) Diamino-C₁-C₈-alkane;
c5) 2,2'-Bisoxazoline der allgemeinen Formel III 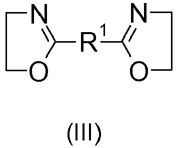 wobei R₁ eine Einfachbindung, eine (CH₂)_{z}-Alkylengruppe, mit z = 2, 3 oder 4, oder eine Phenylengruppe bedeutet;
c6) Aminocarbonsäuren, die beispielsweise ausgewählt sind unter natürlichen Aminosäuren, Polyamiden mit einem Molekulargewicht von höchstens 18000g/mol, erhältlich durch Polykondensation einer Dicarbonsäure mit 4 bis 6 C-Atomen und eines Diamins mit 4 bis 10 C-Atomen, Verbindungen der Formeln IV a und IVb 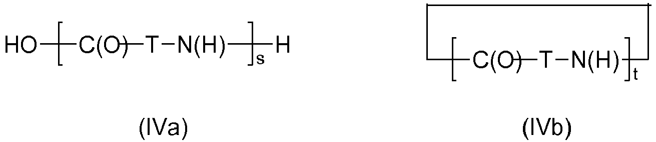 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H-und -C(R²)HCH₂, wobei R² für Methyl oder Ethyl steht,
   und Polyoxazolinen mit der wiederkehrenden Einheit V 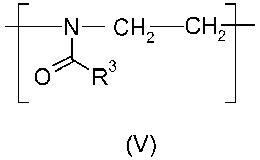 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht; und
c7) Diisocyanate.

Beispiele für die Komponente c1 sind Diethylenglykol, Triethylenglykol, Polyethylenglykol, Polypropylenglykol und Polytetrahydrofuran (Poly-THF), besonders bevorzugt Diethylenglykol, Triethylenglykol und Polyethylenglykol, wobei man auch Mischungen davon oder Verbindungen, die unterschiedliche Alkyleneinheiten A aufweisen (siehe Formel I), beispielsweise Polyethylenglykol, das Propyleneinheiten (A = 1,2- oder 1,3-Propandiyl) enthält, einsetzen kann. Letztere sind beispielsweise erhältlich durch Polymerisation nach an sich bekannten Methoden von zuerst Ethylenoxid und anschließend Propylenoxid. Besonders bevorzugt sind Copolymere auf Basis von Polyalkylenglykolen, mit unterschiedlichen Variablen A, wobei Einheiten gebildet aus Ethylenoxid (A = 1,2-Ethandiyl) überwiegen. Das Molekulargewicht (Zahlenmittel Mₙ) des Polyethylenglykols wählt man in der Regel im Bereich von 250 bis 8000, bevorzugt von 600 bis 3000 g/mol.

Nach einer der Ausführungsformen können beispielsweise 80 bis 99,8, bevorzugt 90 bis 99,5 mol-% der Diole B und 0,2 bis 20, bevorzugt 0,5 bis 10 mol-% der Dihydroxyverbindungen c1, bezogen auf die molare Menge von B und c1, für die Herstellung der Copolyester verwendet werden.

Beispiele für bevorzugte Komponenten c2 sind Glykolsäure, D-, L-, D,L-Milchsäure, 6-Hydroxyhexansäure, deren cyclische Derivate wie Glycolid (1,4-Dioxan-2,5-dion), D-, L-Dilactid (3,6-dimethyl-1,4- dioxan-2,5-dion), p-Hydroxybenzoesäure sowie deren Oligomere und Polymere wie 3-Polyhydroxybuttersäure, Polyhydroxyvaleriansäure, Polylactid (beispielsweise als EcoPLA® (Fa. Cargill) erhältlich) sowie eine Mischung aus 3-Polyhydroxybuttersäure und Polyhydroxyvaleriansäure (letzteres ist unter dem Namen Biopol® von Zeneca erhältlich). Besonders bevorzugt für die Herstellung von Copolyestern sind die niedermolekularen und cyclischen Derivate davon. Die Hydroxycarbonsäuren, bzw. ihre Oligomere und/oder Polymere, können beispielsweise in Mengen von 0,01 bis 20, bevorzugt von 0,1 bis 10 Gew.-%, bezogen auf die Menge an A und B verwendet werden.

Bevorzugte Komponenten c3 sind Amino-C₂-C₆-alkanole wie 2-Aminoethanol, 3-Aminopropanol, 4-Aminobutanol, 5-Aminopentanol, 6-Aminohexanol sowie Amino-C₅-C₆-cycloalkanole wie Aminocyclopentanol und Aminocyclohexanol oder Mischungen davon.

Bevorzugte Komponenten c4) sind Diamino-C₄-C₆-alkane wie 1,4-Diaminobutan, 1,5-Diaminopentan und 1,6-Diaminohexan.

Nach einer bevorzugten Ausführungsform werden 0,5 bis 20 mol-%, bevorzugt 0,5 bis 10 mol-%, c3, bezogen auf die Molmenge von B, und von 0 bis 15, bevorzugt von 0 bis 10 mol-%, c4, bezogen auf die Molmenge von B, für die Herstellung der Copolyester eingesetzt.

Bevorzugte Bisoxazoline III der Komponente c5) sind solche, in denen R¹ eine Einfachbindung, eine (CH₂)_{z}-Alkylengruppe, mit z = 2, 3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)-butan, 1,4-Bis(2-oxazolinyl)benzol, 1,2-Bis(2-oxazolinyl)benzol oder 1,3-Bis(2-oxazolinyl)benzol genannt. Bisoxazoline der allgemeinen Formel III sind im Allgemeinen erhältlich durch das Verfahren aus Angew. Chem. Int. Edit., Vol. 11 (1972), S. 287-288.

Zur Herstellung der Polyester können beispielsweise von 80 bis 98 mol-% B, bis zu 20 mol-% c3, z. B. 0,5 bis 20 mol-% c3, bis zu 20 mol-%, z. B. 0,5 bis 20 mol-% c4, und bis zu 20 mol-%, z. B. 0,5 bis 20 mol-% c5, jeweils bezogen auf die Summe der Molmengen der Komponenten B, c3, c4 und c5, verwendet werden. Nach einer anderen bevorzugten Ausführungsform ist es möglich von 0,1 bis 5 Gew.-%, bevorzugt 0,2 bis 4 Gew.-% c5, bezogen auf das Gesamtgewicht von A und B, einzusetzen.

Als Komponente c6 können natürliche Aminocarbonsäuren verwendet werden. Zu diesen zählen Valin, Leucin, Isoleucin, Threonin, Methionin, Phenylalanin, Tryptophan, Lysin, Alanin, Arginin, Aspartamsäure, Cystein, Glutaminsäure, Glycin, Histidin, Prolin, Serin, Tryosin, Asparagin oder Glutamin.

Bevorzugte Aminocarbonsäuren der allgemeinen Formeln IVa und IVb sind die, worin s eine ganze Zahl von 1 bis 1000 und t eine ganze Zahl von 1 bis 4, bevorzugt 1 oder 2 bedeuten und T ausgewählt ist aus der Gruppe Phenylen und -(CH₂)ᵤ-, wobei u 1, 5 oder 12 bedeutet.

Ferner kann c6 auch ein Polyoxazolin der allgemeinen Formel V sein. Die Komponente c6 kann aber auch eine Mischung unterschiedlicher Aminocarbonsäuren und/oder Polyoxazoline sein.

Nach einer bevorzugten Ausführungsform kann c6 in Mengen von 0,01 bis 20, bevorzugt von 0,1 bis 10 Gew.-%, bezogen auf die Gesamtmenge der Komponenten A und B, eingesetzt werden.

Als Komponente c7 können aromatische oder aliphatische Diisocyanate eingesetzt werden. Es können aber auch höher funktionelle Isocyanate verwendet werden. Beispiele für aromatische Diisocyanate sind Toluylen-2,4-diisocyanat, Toluylen-2,6-diisocyanat, 2,2'-Diphenylmethandiisocyanat, 2,4'-Diphenylmethandiisocyanat, 4,4'-Diphenylmethandiisocyanat, Naphthylen-1,5-diisocyanat oder Xylylen-diisocyanat. Beispiele für aliphatische Diisocyanate sind vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z. B. 1,6-Hexamethylendiisocyanat, Isophorondiisocyanat oder Methylen-bis(4-isocyanatocyclohexan). Als Komponente c7 kommen weiterhin Tri(4-isocyanatophenyl)methan sowie die Cyanurate, Uretdione und Biurete der vorgenannten Diisocyanate in Betracht.

Im Allgemeinen wird die Komponente c7, sofern erwünscht, in Mengen von 0,01 bis 5, bevorzugt 0,05 bis 4 mol-%, besonders bevorzugt 0,1 bis 4 mol-% bezogen auf die Summe der Molmengen von A und B verwendet.

Als weitere Komponenten, die optional zur Herstellung der Polyester eingesetzt werden können, zählen Verbindungen D, die mindestens drei Gruppen/Funktionalitäten enthalten, welche mit Carbonsäure- oder Hydroxylgruppen unter Bindungsbildung reagieren. Beispiele für funktionelle Gruppen, welche mit OH-Gruppen reagieren sind insbesondere Isocyanatgruppen, Epoxidgruppen, Oxazolingruppen, Carboxylgruppen in freier oder veresterter Form und Amidgruppen. Funktionelle Gruppen, welche mit Carboxylgruppen reagieren, sind insbesondere Hydroxylgruppen und primäre Aminogruppen. Derartige Verbindungen werden auch als Vernetzer bezeichnet. Mittels der Verbindung D lassen sich biologisch abbaubare Copolyester mit einer strukturellen Viskosität aufbauen. Das rheologische Verhalten der Schmelzen verbessert sich; die biologisch abbaubaren Copolyester lassen sich leichter verarbeiten, beispielsweise besser durch Schmelzeverfestigung zu Folien ausziehen. Die Verbindungen D wirken scherentzähend, d. h. die Viskosität unter Belastung wird geringer. Die Verbindungen D enthalten bevorzugt drei bis zehn, z. B. 3, 4, 5 oder 6, funktionelle Gruppen, welche zur Ausbildung von Esterbindungen fähig sind. Besonders bevorzugte Verbindungen D haben drei bis sechs funktionelle Gruppen dieser Art im Molekül, insbesondere drei bis sechs Hydroxylgruppen und/oder Carboxylgruppen. Beispielhaft seien genannt: Polycarbonsäuren und Hydroxycarbonsäuren wie Weinsäure, Zitronensäure, Äpfelsäure; Trimesinsäure; Trimellitsäure, -anhydrid; Pyromellitsäure, -dianhydrid und Hydroxyisophthalsäure sowie Polyole wie Trimethylolpropan, Trimethylolethan; Pentaerythrit, Polyethertriole und Glycerin. Bevorzugte Verbindung D sind Polyole, bevorzugt Trimethylolpropan, Pentaerythrit und insbesondere Glycerin. Die Verbindungen D werden, sofern erwünscht, in der Regel in Mengen von 0,0005 bis 1 mol/kg, vorzugsweise 0,001 bis 0,5 mol/kg und insbesondere 0,005 bis 0,3 mol/kg bezogen auf Gesamtmenge Komponenten A, B, C und D, bzw. auf das Gesamtgewicht des Polyesters, eingesetzt. Vorzugsweise werden die Verbindungen D, sofern erwünscht, 0,01 bis 5 Gew.-%, insbesondere 0,05 bis 3 Gew.-% und insbesondere 0,1 bis 2 Gew.-%, speziell 0,2 bis 2 Gew.-%, bezogen auf Gesamtmenge Komponenten A, B, C und D, bzw. auf das Gesamtgewicht des Polyesters, eingesetzt.

In der Regel ist es sinnvoll die vernetzenden (mindestens trifunktionellen) Verbindungen D zu einem früheren Zeitpunkt der Polykondensation zuzugeben.

Neben den vorgenannten Komponenten A, B, gegebenenfalls C und gegebenenfalls D können zur Herstellung der erfindungsgemäß bevorzugten Copolyester auch bi- oder polyfunktionelle Epoxide eingesetzt werden (Komponente E). Geeignete bi- oder polyfunktionelle Epoxide sind insbesondere Epoxidgruppen-haltige Copolymere auf Basis Styrol, Acrylsäureester und/oder Methacrylsäureester. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mw der Polymere beträgt vorzugsweise 2000 bis 25000, insbesondere 3000 bis 8000. Das mittlere Molekulargewicht (Zahlenmittel) Mₙ der Polymere beträgt vorzugsweise 400 bis 6000, insbesondere 1000 bis 4000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Komponente E besonders geeignet ist Joncryl^{®} ADR 4368. Die Komponente E wird üblicherweise als Kettenverlängerer eingesetzt. Bezüglich der Menge gilt das zuvor für die Komponente E, insbesondere für die Komponenten c2), c3), c4), c5) und c6) Gesagte.

In besonders bevorzugten Copolyestern umfasst die Säurekomponente A insbesondere
a1) 60 bis 90 Mol-% oder 60 bis 80 Mol-%, insbesondere 65 bis 80 Mol-% und speziell 66 bis 75 Mol-%, mindestens einer aliphatischen oder mindestens einer cycloaliphatischen Dicarbonsäure oder deren esterbildenden Derivate oder Mischungen davon,
a2) 10 bis 40 Mol-% oder 20 bis 40 Mol-%, insbesondere 20 bis 35 Mol-% und speziell 25 bis 34 Mol-% mindestens einer aromatischen Dicarbonsäure oder deren esterbildendem Derivat oder Mischungen davon, wobei die aromatische Dicarbonsäure vorzugsweise Terephtalsäure ist,
wobei die Molprozente der Komponenten a1) und a2) zusammen 100 % ergeben. Derartige besonders bevorzugte Copolyester zeichnen sich trotz ihrer Vergleichsweise hohen Nullscherviskosität bei 180 °C durch vergleichsweise gute Dispergierbarkeit aus.

Unter den besonders bevorzugten Copolyestern sind solche besonders bevorzugt, worin die polyesterbildenden Bestandteile 0,1 bis 2 Gew.-%, häufig 0,2 bis 2 Gew.-%, insbesondere 0,3 bis 1,8 Gew.-% und speziell 0,4 bis 1,5 Gew.-%, bezogen auf das Gesamtgewicht des Polyesters, einer oder mehrerer Verbindungen D enthalten, die wenigstens 3 zur Bildung von Estergruppen geeignete Funktionalitäten aufweisen. Bezüglich bevorzugter Verbindungen D gilt das zuvor Gesagte.

Unter den besonders bevorzugten Copolyestern sind solche besonders bevorzugt, worin der Anteil der Diolkomponente B 98 bis 102 Mol-%, bezogen auf die Gesamtmenge der Komponenten a1) und a2) ist. Bezüglich bevorzugter Diole gilt das zuvor Gesagte.

Unter den besonders bevorzugten Copolyestern sind solche besonders bevorzugt, worin die polyesterbildenden Bestandteile nicht mehr als 2 Gew.-%, bezogen auf das Gesamtgewicht des Polyesters, einer oder mehrerer weiterer bifunktioneller Verbindungen C enthalten, die mit Carbonsäure- oder Hydroxylgruppen unter Bindungsbildung reagieren. Bezüglich bevorzugter Verbindungen C gilt das zuvor Gesagte.

In den besonders bevorzugten Copolyestern machen die Komponenten a1), a2) und b) vorzugsweise 96 bis 99,8 Gew.-% des besonders bevorzugten Copolyesters aus.

Die Copolyester sind teilweise bekannt, z. B. aus der EP-A 488 617, WO96/15173 und WO 04/67632, oder können nach an sich bekannten Methoden hergestellt werden. Besonders bevorzugt werden die Copolyester nach dem in EP Anm. Nr. 08154541.0 beschriebenen kontinuierlichen Verfahren hergestellt.

Die Synthese der beschriebenen Copolyester erfolgt gemäß einer ersten Ausführungsform in einer zweistufigen Reaktionskaskade. In der Regel werden zunächst die Dicarbonsäuren bzw. ihre Derivate A zusammen mit der Komponente B und gegebenenfalls D in Anwesenheit eines Veresterungs-Katalysators (bzw. wenn die Carbonsäuren A in Form ihrer Ester eingesetzt werden, in Gegenwart eines Umesterungskatalysators) zu einem Präpolyester umgesetzt. Dieser Präpolyester weist im Allgemeinen eine Viskositätszahl (VZ) von 50 bis 100 mL/g, vorzugsweise 60 bis 90 mL/g auf. Als Katalysatoren werden üblicherweise Zink-, Aluminium- und insbesondere Titankatalysatoren eingesetzt. Titankatalysatoren wie Tetra(isopropyl)orthotitanat und insbesondere Tetrabutylorthotitanat (TBOT) haben gegenüber den in der Literatur häufig verwendeten Zinn-, Antimon-, Kobalt- und Bleikatalysatoren wie beispielsweise Zinndioctanoat den Vorteil, dass im Produkt verbleibende Restmengen des Katalysators oder Folgeprodukte des Katalysators weniger toxisch sind. Dieser Umstand ist bei den biologisch abbaubaren Polyestern besonders wichtig, da sie beispielsweise als Kompostierbeutel oder Mulchfolien unmittelbar in die Umwelt gelangen. Die erfindungsgemäßen Polyester werden gegebenenfalls anschließend nach den in WO 96/15173 und EP-A 488 617 beschriebenen Verfahren kettenverlängert. Der Präpolyester wird beispielsweise mit Kettenverlängerern C), z. B. mit Diisocyanaten oder mit epoxidhaltigen Polymethacrylaten in einer Kettenverlängerungsreaktion zu einem Polyester mit einer VZ von 60 bis 450 mL/g, vorzugsweise 80 bis 250 mL/g umgesetzt.

In einer anderen Methode wird die Komponente A in Anwesenheit eines Überschusses an Komponente B und gegebenenfalls D zusammen mit dem Katalysator zunächst kondensiert. Anschließend wird die Schmelze des so erhaltenen Präpolyesters, üblicherweise bei einer Innentemperatur von 200 bis 250 °C unter Abdestillieren freiwerdenden Diols bis zur gewünschten Viskosität mit einer Viskositätszahl (VZ) von 60 bis 450 mL/g und vorzugsweise 80 bis 250 mL/g kondensiert. Diese Kondensation erfolgt in der Regel innerhalb von 3 bis 6 Stunden bei vermindertem Druck. Gegebenenfalls erfolgt auch hiernach eine Umsetzung mit dem Kettenverlängerer der Komponente D.

Besonders bevorzugt werden die Copolyester nach dem in EP Anm. Nr. 08154541.0 beschriebenen kontinuierlichen Verfahren hergestellt. Hierbei wird beispielsweise eine Mischung aus den Komponenten A und B und gegebenenfalls weiteren Comonomeren, ohne Zugabe eines Katalysators, zu einer Paste vermischt oder alternativ die flüssigen Ester der Komponente A und die Komponente B und gegebenenfalls weiteren Comonomere, ohne Zugabe eines Katalysators, in den Reaktor eingespeist und
1. in einer ersten Stufe diese Mischung zusammen mit der Gesamtmenge oder einer Teilmenge des Katalysators kontinuierlich verestert bzw. umgeestert;
2. in einer zweiten Stufe gegebenenfalls mit der Restmenge Katalysator kontinuierlich das gemäß 1.) erhaltene Umesterungs- bzw. Veresterungsprodukt - vorzugsweise in einem Turmreaktor, wobei der Produktstrom im Gleichstrom über eine Fallfilmkaskade geführt wird und die Reaktionsdämpfe in situ aus dem Reaktionsgemisch entfernt werden - bis zu einer Viskositätszahl nach DIN 53728 von 20 bis 60 mL/g vorkondensiert;
3. in einer dritten Stufe kontinuierlich das aus 2.) erhältliche Produkt - vorzugsweise in einem Käfigreaktor - bis zu einer Viskositätszahl nach DIN 53728 von 70 bis 130 mL/g polykondensiert und gegebenenfalls
4. in einer vierten Stufe kontinuierlich das aus 3.) erhältliche Produkt bis zu einer Viskositätszahl nach DIN 53728 von 80 bis 250 mL/g in einer Polyadditionsreaktion mit einem Kettenverlängerer in einem Extruder, List-Reaktor oder statischen Mischer umgesetzt.

Die oben genannten Viskositätszahlbereiche dienen lediglich als Anhaltspunkte für bevorzugte Verfahrensvarianten, sollen jedoch nicht beschränkend für den vorliegenden Anmeldegegenstand gelten.

Neben dem oben beschriebenen kontinuierlichen Verfahren können die erfindungsgemäßen Copolyester auch in einem Batch-Prozess hergestellt werden. Hierzu werden die Komponenten A, B und gegebenenfalls D in beliebiger Dosierreihenfolge gemischt und zu einem Präpolyester kondensiert. Gegebenenfalls unter Zuhilfenahme der Komponente D kann ein Polyester mit der gewünschten Viskositätszahl eingestellt werden.

Die bevorzugten Copolyester weisen in der Regel ein zahlenmittleres Molekulargewicht M_{N} im Bereich von 5000 bis 1000000 Dalton, insbesondere im Bereich von 8000 bis 800000 Dalton und speziell im Bereich von 10000 bis 500000 Dalton auf. Das gewichtsmittlere Molekulargewicht M_{W} der erfindungsgemäß bevorzugten Copolyester liegt in der Regel im Bereich von 20000 bis 5000000 Dalton, häufig im Bereich von 30000 Dalton bis 4000000 Dalton und insbesondere im Bereich von 40000 bis 2500000 Dalton. Der Polydispersitätsindex M_{W}/M_{N} beträgt in der Regel wenigstens 2 und liegt häufig im Bereich von 3 bis 25, insbesondere im Bereich von 5 bis 20. Vorzugsweise sind die Copolyester teilkristallin und weisen einen Schmelzpunkt oder Schmelzbereich im Bereich von 80 bis 170 °C, insbesondere im Bereich von 90 bis 150 °C auf. Die Viskositätszahl der Copolyester liegt typischerweise im Bereich von 50 bis 500 ml/g, häufig im Bereich von 80 bis 300 ml/g und insbesondere im Bereich von 100 bis 250 ml/g (bestimmt nach EN ISO 1628-1 bei 25 °C an einer 0,5 gew.-%igen Lösung des Polymeren in o-Dichlorbenzol/Phenol (1:1 w/w)). Die bevorzugten Copolyester sind zum einen durch eine hohe Schmelzviskosität η₀, die bei 180 °C in der Regel wenigstens 60 Pa·s, häufig wenigstens 80 Pa·s, insbesondere wenigstens 100 Pa·s, z. B. 60 bis 20000 Pa·s, insbesondere 80 bis 15000 Pa·s und speziell 100 bis 10000 Pa·s beträgt, und durch eine geringe Säurezahl von weniger als 5 mg KOH/ g Polymer, insbesondere maximal 3 mg KOH/g Polymer und speziell maximal 1 mg KOH/g Polymer charakterisiert.

Ferner weisen naturgemäß die Copolyester im Wesentlichen keine funktionellen Gruppen auf, die den Polymeren eine Wasserlöslichkeit verleihen. Dementsprechend beträgt die Anzahl an Sulfonsäuregruppen im Copolyester in der Regel weniger als 0,1 mmol/g, insbesondere weniger als 0,05 mmol/g oder weniger als 0,01 mmol/g Polymer.

In einer speziellen Ausführungsform der Erfindung handelt es sich bei den zu dispergierenden Polymeren um einen teilaromatischen Copolyester, der im Folgenden auch als Copolyesters Csp bezeichnet wird und der durch folgende Zusammensetzung charakterisiert ist:
a1) 60 bis 80 Mol %, häufig 65 bis 80 Mol %, insbesondere 66 bis 75 Mol-%, bezogen auf die Gesamtmenge der Komponenten a1) und a2) wenigstens einer aliphatischen Dicarbonsäure oder deren esterbildendes Derivat oder Mischungen davon und
a2) 20 bis 40 Mol %, häufig 20 bis 35 Mol %, insbesondere 25 bis 34 Mol-%, bezogen auf die Gesamtmenge der Komponenten a1) und a2), Terephthalsäure oder deren esterbildenden Derivate oder Mischungen davon;
b) 98 bis 102 Mol %, wenigstens einer Diolkomponente b), die unter 1,3-Propandiol und 1,4-Butandiol und deren Gemischen ausgewählt ist;
d) 0,1 bis 2 Gew.-%, häufig 0,2 bis 2 Gew.-%, insbesondere 0,3 bis 1,8 Gew.-% und speziell 0,4 bis 1,5 Gew.-%, bezogen auf die Gesamtmenge der Komponenten a1), a2), jeweils gerechnet als Dicarbonsäuren, und b), einer oder mehreren Verbindungen D, die wenigstens 3 Funktionalitäten aufweisen, welche mit Carbonsäure- oder Hydroxylgruppen unter Bindungsbildung reagieren;
wobei die Komponenten a1), a2) und b) 80 bis 99,8 Gew.-%, insbesondere 90 bis 99,7 Gew.-%, und speziell 95 bis 99,6 Gew.-% des Polyesters ausmachen.

Derartige Copolyester sind neu und bilden, vermutlich bedingt durch die bestimmte Menge der polyfunktionellen Verbindung D und bestimmten Terephthalsäuregehalt besonders stabile Dispersionen mit geringer Viskosität, ohne dass es auch bei höheren Schmelz- bzw. Nullscherviskositäten des Einsatzes von Weichmachern bedarf. Daher sind Copolyester Csp mit der oben genannten Zusammensetzung im Umfang des Anspruchs 20 als solche Gegenstand der vorliegenden Erfindung. Ebenfalls Gegenstand der vorliegenden Erfindung sind auch wässrige Dispersionen, welche einen Copolyester Csp in Form dispergierter Polymerpartikel enthalten.

Als aliphatische Dicarbonsäuren a1) kommen grundsätzlich die zuvor genannten aliphatischen Dicarbonsäuren in Betracht. Vorzugsweise ist die Komponente a1) ausgewählt unter Bernsteinsäure, Adipinsäure, Sebazinsäure, Azelainsäure, Brassylsäure, und deren Gemischen, sowie den esterbildenden Derivaten davon. Insbesondere ist die Komponente a1) ausgewählt unter Adipinsäure, Sebazinsäure und deren Gemischen, sowie den esterbildenden Derivaten davon.

Bei der Komponente a2) handelt es sich um Terephthalsäure und deren esterbildende Derivate.

Die Terephthalsäure a2) und die aliphatische Dicarbonsäure a1) können als freie Säure oder in Form esterbildender Derivate eingesetzt werden. Als esterbildende Derivate sind insbesondere die Di-C₁-C₆-alkylester, wie Dimethyl-, Diethyl-, Di-n-propyl, Diisopropyl, Di-n-butyl, Di-iso-butyl, Di-tert.-butyl, Di-n-pentyl-, Di-iso-pentyl oder Di-n-hexylester zu nennen. Anhydride der Dicarbonsäuren können ebenfalls eingesetzt werden.

Komponente b), das Diol, ist vorzugsweise 1,4-Butandiol.

Als Komponente d) kommen grundsätzlich die zuvor genannten Verbindungen D in Betracht. Bevorzugte ist die Verbindung D unter Polyolen mit vorzugsweise 3,4 oder 6 OH-Gruppen ausgewählt. Besonders bevorzugt ist Glycerin.

Die Herstellung der erfindungsgemäßen Copolyester Csp kann entsprechend den zuvor für die erfindungsgemäß bevorzugten, aus den Komponenten A, B, gegebenenfalls C und gegebenenfalls D aufgebauten Copolyester erfolgen. In der Regel wird zu Beginn der Polymerisation das Diol (Komponente b)) zu den Säuren (Komponenten i und ii) in einem Verhältnis von Diol zu Disäuren von 1,0 bis 2,5 : 1 und vorzugsweise 1,3 bis 2,2 : 1 eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Diol/Disäuren-Verhältnis von 0,98 bis 1,02 : 1 verstanden. In der Regel ist es sinnvoll die vernetzenden (mindestens trifunktionellen) Verbindungen D zu einem früheren Zeitpunkt der Polykondensation zuzugeben.

Die erfindungsgemäßen Copolyester Csp können Hydroxy- und/oder Carboxylendgruppen in jedem beliebigen Verhältnis aufweisen. Die erfindungsgemäßen Copolyester Csp können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden. Bevorzugt sind erfindungsgemäßen Copolyester Csp mit Säurezahlen kleiner als 5 mg KOH/g, insbesondere maximal 3 mg KOH/g und speziell maximal 1 mg KOH/g.

In einer bevorzugten Ausführungsform der Erfindung werden zur Herstellung der Copolyester Csp auch Verbindungen C und/oder Epoxide E eingesetzt. Hierunter bevorzugt sind die difunktionellen Isocyanate und deren Isocyanurate (Gruppe c7), Bisoxazoline (Gruppe c5) sowie die zuvor genannten Epoxide E. Die Verbindungen C und/oder D werden im Allgemeinen in einer Menge von 0,01 bis 4 Gew.-%, vorzugsweise 0,2 bis 3 Gew.-% und insbesondere bevorzugt 0,35 bis 2 Gew.-%, bezogen auf den Polyester eingesetzt.

Die Copolyester Csp weisen in der Regel ein zahlenmittleres Molekulargewicht M_{N} im Bereich von 5000 bis 1000000 Dalton, insbesondere im Bereich von 8000 bis 800000 Dalton und speziell im Bereich von 10000 bis 500000 Dalton auf. Das gewichtsmittlere Molekulargewicht Mw der erfindungsgemäß bevorzugten Copolyester Csp liegt in der Regel im Bereich von 20000 bis 5000000 Dalton, häufig im Bereich von 30000 Dalton bis 4000000 Dalton und insbesondere im Bereich von 40000 bis 2500000 Dalton. Der Polydispersitätsindex der Copolyester Csp M_{W}/M_{N} beträgt in der Regel wenigstens 2 und liegt häufig im Bereich von 3 bis 25, insbesondere im Bereich von 5 bis 20. In der Regel sind die Copolyester Csp teilkristallin und weisen einen Schmelzpunkt oder Schmelzbereich im Bereich von 80 bis 170 °C, insbesondere im Bereich von 90 bis 150 °C auf. Die Viskositätszahl der Copolyester Csp liegt typischerweise im Bereich von 50 bis 500 ml/g, häufig im Bereich von 80 bis 300 ml/g und insbesondere im Bereich von 100 bis 250 ml/g (bestimmt nach EN ISO 1628-1 bei 25 °C an einer 0,5 gew.-%igen Lösung des Polymeren in o-Dichlorbenzol/Phenol (1:1 w/w)). Die Copolyester Csp sind vorzugweise zum einen durch eine hohe Schmelzviskosität η₀, die bei 180 °C in der Regel wenigstens 60 Pa·s, häufig wenigstens 80 Pa·s, insbesondere wenigstens 100 Pa·s, z. B. 60 bis 20000 Pa·s, insbesondere 80 bis 15000 Pa·s und speziell 100 bis 10000 Pa·s beträgt, und durch eine geringe Säurezahl von weniger als 5 mg KOH/ g Polymer, insbesondere maximal 3 mg KOH/g Polymer und speziell maximal 1 mg KOH/ g Polymer charakterisiert.

Gegenstand der Erfindung sind auch wässrige Dispersionen der Copolyester Csp. Der mittlere Partikeldurchmesser der Polymerpartikel (Gewichtsmittel, bestimmt durch Lichtstreuung) in diesen Dispersionen wird in der Regel einen Wert von 10 µm, häufig 5 µm, insbesondere 2000 nm, speziell 1500 nm nicht überschreiten und liegt typischerweise im Bereich von 50 nm bis 10 µm, häufig im Bereich von 100 nm bis 5 µm, insbesondere im Bereich von 150 bis 2000 nm, speziell im Bereich von 200 bis 1500 nm. Vorzugsweise werden weniger als 90 Gew.-% der Polymerpartikel einen Teilchendurchmesser von 10 µm, insbesondere 5 µm und speziell 2 µm nicht überschreiten. Die Bestimmung der Partikelgröße erfolgt in an sich bekannter Weise durch Lichtstreuung an verdünnten Dispersionen (0,01 bis 1 Gew.-%).

Anders als die Dispersionen des Standes der Technik lassen sich mit den erfindungsgemäßen Copolyestern Csp auch bei hohen Polymergehalten niedrigviskose Dispersionen herstellen. Vorzugsweise liegt die Viskosität der erfindungsgemäß erhältlichen Dispersionen, bestimmt nach Brookfield bei 20 °C bei einem Wert von maximal 2 Pa·s, häufig bei maximal 1 Pa·s, z. B. im Bereich von 1 bis 2000 mPa·s, insbesondere im Bereich von 10 bis 1000 mPa·s.

Der Polymergehalt der erfindungsgemäß erhältlichen Dispersionen der Copolyester Csp liegt typischerweise im Bereich von 10 bis 60 Gew.-%, häufig im Bereich von 20 bis 55 Gew.-% und insbesondere im Bereich von 30 bis 50 Gew.-%.

In einer weiteren Ausführungsform der Erfindung handelt es sich bei den zu dispergierenden Polymeren um Polyalkylencarbonate, insbesondere um Polyethylencarbonate und Polypropylencarbonate. Beispiele für geeignete Polyalkylencarbonate sind die aus EP-A 1264860 bekannten Polyethylencarbonate, die durch Copolymerisation von Ethylenoxid und Kohlendioxid in Gegenwart geeigneter Katalysatoren erhalten werden, und insbesondere Polypropylencarbonat (siehe beispielsweise WO 2007/125039), erhältlich durch Copolymerisation von Propylenoxid und Kohlendioxid in Gegenwart geeigneter Katalysatoren.

Die Polyalkylencarbonat-Kette kann sowohl Ether- als auch Carbonatgruppen enthalten. Der Anteil an Carbonatgruppen im Polymer ist abhängig von den Reaktionsbedingungen wie insbesondere dem verwendeten Katalysator. In den bevorzugten Polyalkylencarbonaten sind mehr als 85 und bevorzugt mehr als 90 % aller Verknüpfungen Carbonat-Gruppen. Geeignete Zink- und Kobalt-Katalysatoren sind in US 4789727 und US 7304172 beschrieben. Polypropylencarbonat kann weiterhin analog Soga et al., Polymer Journal, 1981, 13, 407-10 hergestellt werden. Das Polymer ist auch kommerziell erhältlich und wird beispielsweise von Empower Materials Inc. oder Aldrich im Markt angeboten.

Das zahlenmittlere Molekulargewicht Mn der Polyalkylencarbonate beträgt in der Regel 70000 bis 90000 Dalton. Das gewichtsmittlere Molekulargewicht Mw liegt üblicherweise bei 250000 bis 400000 Dalton. Das Verhältnis der Ether- zu Carbonat-Gruppen im Polymer beträgt 5 bis 90 %. Die Polydispersität (Verhältnis von Gewichtsmittel (M_{W}) zu Zahlenmittel (M_{N})) liegt in der Regel zwischen 1 und 80 und vorzugsweise zwischen 2 und 10. Die verwendeten Polypropylencarbonate können bis zu 1 % Carbamat- und Harnstoff-Gruppen enthalten.

Geeignete Polyalkylencarbonate sind auch kettenverlängerte Polyalkylencarbonate. Als Kettenverlängerer für die Polyalkylencarbonate werden insbesondere Maleinsäureanhydrid, Essigsäureanhydrid, Di- oder Polyisocyanate, Di- oder Polyoxazoline oder -oxazine oder Di- oder Polyepoxide eingesetzt. Beispiele für Isocyanate sind Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat und insbesondere 1,6-Hexamethylendiisocyanat, Isophorondiisocyanat oder Methylen-bis(4-isocyanatocyclohexan), verstanden. Besonders bevorzugte aliphatische Diisocyanate sind Isophorondiisocyanat und insbesondere 1,6-Hexamethylendiisocyanat. Als Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt. Die Kettenverlängerer werden vorzugsweise in Mengen von 0,01 bis 5, bevorzugt 0,05 bis 2, besonders bevorzugt 0,08 bis 1 Gew-%, bezogen auf die Polycarbonatmenge eingesetzt. Kettenverlängerte Polyalkylencarbonate weisen typischerweise ein zahlenmittleres Molekulargewicht Mn von 30000 bis 5000000 Dalton, bevorzugt 35000 bis 250000 Dalton und insbesondere bevorzugt von 40000 bis 150000 Dalton auf.

In einer Ausführungsform der vorliegenden Erfindung können als Polymere P auch Mischungen von verschiedenen Estergruppen enthaltenden Polymeren P, z. B. Mischungen der vorgenannten Copolyester mit Polycaprolactonen oder Polylactiden, sowie Mischungen der Estergruppen enthaltenden Polymere P mit anderen Biopolymeren wie Stärke oder mit modifizierten bioabbaubaren Biopolymeren, wie modifizierte Stärke, Celluloseester (z. B. Celluloseacetat, Celluloseacetatbutyrat) oder bioabbaubaren artifiziellen Polymeren wie Polylactid (beispielsweise als EcoPLA® (Fa. Cargill) erhältlich) eingesetzt werden.

In bevorzugen Ausführungsformen des erfindungsgemäßen Verfahrens handelt es sich bei den dispergierten Polymeren um Polymere, die biologisch abbaubar sind. Hierzu zählen insbesondere die vorgenannten aliphatischen Polyester, insbesondere Polylactide und Polycaprolactone und darauf basierende Copolyester sowie die vorgenannten aliphatischen und aliphatisch-aromatischen Copolyester, die aus den Monomeren A und B und gegebenenfalls C und/oder D aufgebaut sind.

Unter biologischer Abbaubarkeit versteht man nach DIN V 54900, dass die Polymere unter Umwelteinflüssen in einer angemessenen und nachweisbaren Zeitspanne zerfallen. Der Abbau kann hydrolytisch und/oder oxidativ erfolgen und wird zum überwiegenden Teil durch die Einwirkung von Mikroorganismen wie Bakterien, Hefen, Pilzen und Algen bewirkt. Die biologische Abbaubarkeit lässt sich z. B. dadurch bestimmen, dass das Polymer mit Kompost gemischt und für eine bestimmte Zeit gelagert wird. Gemäß ASTM D 5338, ASTM D 6400, EN 13432 und DIN V 54900 wird CO₂-freie Luft beispielsweise durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als biologische Abbaubarkeit definiert. Biologisch abbaubare Polymere zeigen in der Regel schon nach wenigen Tagen der Kompostierung deutliche Abbauerscheinungen wie Pilzbewuchs, Riss- und Lochbildung.

Die biologische Abbaubarkeit lässt sich auch dadurch bestimmen, dass man das Polymer mit einer bestimmten Menge eines geeigneten Enzyms bei einer bestimmtem Temperatur für eine festgesetzte Zeitdauer inkubiert und anschließend die Konzentration der im Inkubationsmedium gelösten organischen Abbauprodukte bestimmt. Beispielsweise kann man analog zu Y. Tokiwa et al., American Chemical Society Symposium 1990, Chapter 12, "Biodegradation of Synthetic Polymers Containing Ester Bonds" das Polymer mit einer vorbestimmten Menge einer Lipase beispielsweise aus Rhizopus arrhizus, Rhizopus delemar, Achromobacter sp. oder Candida cylindracea bei 30 bis 37 °C mehrere Stunden inkubieren, und anschließend den DOC-Wert (dissolved organic carbon) des von unlöslichen Bestandteilen befreiten Reaktionsgemischs messen. Als biologisch abbaubar gelten im Rahmen der vorliegenden Erfindung solche Polymere, die nach der enzymatischen Behandlung mit einer Lipase aus Rhizopus arrhizus bei 35 °C nach 16 h einen DOC-Wert ergeben, der wenigstens 10 Mal höher ist als derjenige desselben Polymers, das nicht mit dem Enzym behandelt wurde.

Die nach dem erfindungsgemäßen Verfahren erhältlichen Polymerdispersionen sind ebenfalls Gegenstand der vorliegenden Erfindung. Sie zeichnen sich in der Regel durch eine sehr feine Verteilung der Polyesterpartikel in der dispersen Phase aus.

Der mittlere Partikeldurchmesser der Polymerpartikel (Gewichtsmittel, bestimmt durch Lichtstreuung) wird in der Regel einen Wert von 10 µm, häufig 5 µm nicht überschreiten und liegt typischerweise im Bereich von 50 nm bis 10 µm, häufig im Bereich von 100 nm bis 5 µm. Vorzugsweise werden weniger als 90 Gew.-% der Polymerpartikel einen Teilchendurchmesser von 15 µm, insbesondere 10 µm und speziell 5 µm nicht überschreiten. Die Bestimmung der Partikelgröße erfolgt in an sich bekannter Weise durch Lichtstreuung an verdünnten Dispersionen (0,01 bis 1 Gew.-%).

Anders als die Dispersionen des Standes der Technik lassen sich mit dem erfindungsgemäßen Verfahren auch bei hohen Polymergehalten niedrigviskose Dispersionen herstellen. Vorzugsweise liegt die Viskosität der erfindungsgemäß erhältlichen Dispersionen, bestimmt nach Brookfield bei 20 °C bei einem Wert von maximal 2 Pa·s, häufig bei maximal 1 Pa·s, z. B. im Bereich von 1 bis 2000 mPa·s, insbesondere im Bereich von 10 bis 1000 mPa·s.

Der Polymergehalt der erfindungsgemäß erhältlichen Dispersionen liegt typischerweise im Bereich von 10 bis 60 Gew.-%, häufig im Bereich von 20 bis 55 Gew.-% und insbesondere im Bereich von 30 bis 50 Gew.-%.

Die nach dem erfindungsgemäßen Verfahren erhältlichen Polymerdispersionen und die erfindungsgemäßen Polymerdispersionen sind für eine Vielzahl von Anwendungen geeignet, die üblicherweise für wässrige Polymerdispersionen in Betracht kommen. Die nach dem erfindungsgemäßen Verfahren erhältlichen Polymerdispersionen und die erfindungsgemäßen Polymerdispersionen, insbesondere solche, in denen das Polymer ein Co-Polyester ist, sind in besonderer Weise für solche Anwendungen geeignet, bei denen eine biologische Abbaubarkeit des Polymerbestandteils wünschenswert ist. Insbesondere eignen sich die wässrigen Dispersionen als Bindemittelbestandteil in wässrigen Bindemittelzusammensetzungen, insbesondere für Bindemittelzusammensetzungen für die Papierherstellung, z.B. als Leimungsmittel für Papier, isnbesondere als Masseleimungsmittel oder als Mittel zur Oberflächenleimung, als Mittel zur Verfestigung von Papier, als Bindemittel für die Papierstreicherei, sowie als Beschichtungsmittel für die Herstellung von Barrierebeschichtungen auf Papier, Pappe oder Karton, weiterhin in Bindemittelzusammensetzungen für die Herstellung von Vliesstoffen (Nonwovens). Weiterhin eignen sich die wässrigen Dispersionen in Klebstoffen, beispielsweise als Kaschierklebstoffe, speziell als Kaschierklebstoffe zum Kaschieren von Kunststofffolien auf flächige Träger wie Papier, Pappe, Karton oder Kunststofffolien, oder zur Formulierung von Wirkstoffen. Die erfindungsgemäßen Polymerdispersionen können auch zur Herstellung von Folienmaterialien verwendet werden.

Eine besonders bevorzugte Verwendung erfindungsgemäß erhältlicher bzw. erfindungsgemäßer wässrige Polymerdispersionen ist deren Verwendung für die Herstellung von Barrierebeschichtungen auf flächigen, wasserdampfdurchlässigen Trägern wie Papier, Pappe oder Karton. Hierzu wird die Polymerdispersion, gegebenenfalls nach Konfektionierung mit üblichen Hilfsstoffen, wie Verdickern oder Bakteriziden, auf den flächigen, wasserdampfdurchlässigen Träger aufgebracht und anschließend getrocknet. Die Auftragsmenge ist dabei in der Regel so bemessen, dass eine Beschichtungsstärke, gerechnet als Polymer, im Bereich von 1 bis 50 g/m², insbesondere im Bereich von 5 bis 30 g/m² resultiert. Die konfektionierte Dispersion enthält in der Regel nicht mehr als 20 Gew.-%, insbesondere nicht mehr als 10 Gew.-%, bezogen auf den Gesamtfeststoffgehalt der konfektionierten Dispersion, an nachträglich eingebrachten Hilfsstoffen, d.h. die Gesamtmenge an Polymer und oberflächenaktiver Substanz macht in der Regel wenigstens 80 Gew.-%, insbesondere wenigstens 90 Gew.-%, bezogen auf den Gesamtfeststoffgehalt der konfektionierten Dispersion aus. Das Aufbringen der wässrigen Polymerdispersion auf den flächigen, wasserdampfdurchlässigen Träger, wie insbesondere Papier, Pappe oder Karton, kann mittels üblicher Vorrichtungen zum Auftragen wässriger Polymerdispersionen auf flächige Träger erfolgen, z.B. mittels Leimpressen, Filmpressen, Bladecoater, Luftbürsten, Rakeln, durch Vorhangstreichverfahren (curtain coating) oder mittels Spray-Coater.

In bevorzugen Ausgestaltungen erfindungemäßer Dispersionen handelt es sich bei den dispergierten Polymeren um Polymere, die biologisch abbaubar sind. Hierzu zählen insbesondere die vorgenannten aliphatischen Polyester, insbesondere Polylactide und Polycaprolactone und darauf basierende Copolyester sowie die vorgenannten aliphatischen und aliphatisch-aromatischen Copolyester, die aus den Monomeren A und B und gegebenenfalls C und/oder D aufgebaut sind.

Die Erfindung wird im Folgenden anhand von Beispielen erläutert.

### Analytik

Zur Bestimmung der Nullscherviskosität η₀ wurden mittels dynamischer Viskositätsmessung der Polymerschmelzen bei 180 °C mit oszillatorischer Scherung mit geringer Amplitude bei Scherraten im Bereich von 0,01 bis 500 s⁻¹ und einer Schubamplitude von 100 Pa Viskositätskurven bestimmt und hieraus die Nullscherviskosität η₀ durch Extrapolation auf eine Scherrate von 0 s⁻¹ ermittelt. Zur Bestimmung der Viskositätskurven wurde ein Rheometer des Typs "Dynamic Stress Rheometer (DSR)" der Fa. Rheometrics mit einer Platte-Platte-Geometrie (Durchmesser 25 mm, Spalt 1 mm) verwendet.

Die Bestimmung der Scherviskosität der Polymerschmelze unter den Dispergierbedingungen erfolgte mittels dynamischer Viskositätsmessung der Polymerschmelzen mit einem Rotationsrheometer (SR5) der Firma Rhemotrics bei der in den Beispielen angegebenen Temperatur.

Die Bestimmung der Viskosität des Dispergiermediums unter den Dispergierbedingungen erfolgte nach Brookfield mit einem Rotationsrheometer MCR301 der Fa. Anton Paar GmbH bei der in den Beispielen angegebenen Temperatur, wobei die Messung bis zu einer Scherrate von 1000/s durchgeführt wurde und die Viskosität unter Dispergierbedingungen durch Extrapolation auf die dem Beispiel entsprechende Scherrate ermittelt wurde.

Die Viskositätszahl wurde bestimmt nach EN ISO 1628-1 bei 25 °C an einer 0,5 gew.-%igen Lösung des Polymeren in o-Dichlorbenzol/Phenol (1:1 w/w).

Molekulargewichte wurden durch Gelpermeationschromatographie (GPC) gemäß DIN 55672-1 bestimmt.

Die Teilchengrößenverteilung wurde an einer 1 gew.-%igen Verdünnung der Dispersion durch Lichtstreuung bei 25 °C bestimmt.

Die Bestimmung der Brookfield-Viskosität der Dispersionen erfolgte bei 20 °C nach DIN EN ISO 2555 mit einem Rotationsviskosimeter Physika MCR Couette Geometrie CC 27.

### Herstellung der Copolyester Csp:

### Herstellungsbeispiel 1: Polyester A1

Polybutylenterephthalatadipat, das wie folgt hergestellt wurde: 538,3 g Terephthalsäure (27 mol %), 1280,2 g Adipinsäure (73 Mol-%), 1405,9 g 1,4-Butandiol (130 Mol-%) und 37 g Glycerin (1,5 Gew.-%, bezogen auf das Polymer) wurden zusammen mit 1 g Tetrabutylorthotitanat (TBOT) gemischt, wobei das Molverhältnis von Alkoholkomponente zu Säurekomponente 1,30 betrug. Das Reaktionsgemisch wurde auf eine Temperatur von 210 °C erhitzt und bei dieser Temperatur wurde über einen Zeitraum von 2 h das entstandene Wasser abdestilliert. Anschließend wurde die Temperatur auf 240 °C erhöht und schrittweise evakuiert. Überschüssiges 1,4-Butandiol wurde im Vakuum (< 1 mbar) über einen Zeitraum von 2 h abdestilliert.

Das zahlenmittlere Molekulargewicht des dabei erhaltenen Polyesters A1 lag bei 20400 g/mol, das gewichtsmittlere Molekulargewicht bei 140000 g/mol. Die Viskositätszahl VZ betrug 147. Die Schmelztemperatur lag bei 60 °C. Die Nullscherviskosität η₀ bei 180 °C lag bei 630 Pa·s. Die Säurezahl betrug 0,6 mg KOH/g.

### Herstellungsbeispiel 2: Polyester A2

Polybutylenterephthalatadipat, das wie folgt hergestellt wurde: 697,7 g Terephthalsäure (35 Mol-%), 1139,9 g Adipinsäure (65 Mol-%), 1405,9 g 1,4-Butandiol (130 Mol-%) und 37,3 ml Glycerin (1,5 Gew.-%, bezogen auf das Polymer) wurden zusammen mit 2,12 ml Tetrabutylorthotitanat (TBOT) gemischt, wobei das Molverhältnis von Alkoholkomponente zu Säurekomponente 1,30 betrug. Das Reaktionsgemisch wurde auf eine Temperatur von 210 °C erhitzt und bei dieser Temperatur wurde über einen Zeitraum von 2 h das entstandene Wasser abdestilliert. Anschließend wurde die Temperatur auf 240 °C erhöht und schrittweise evakuiert. Überschüssiges 1,4-Butandiol wurde im Vakuum (< 1 mbar) über einen Zeitraum von 1,5 h abdestilliert.

Das zahlenmittlere Molekulargewicht des dabei erhaltenen Copolyesters lag bei 16300 g/mol, das gewichtsmittlere Molekulargewicht bei 126000 g/mol. Die Viskositätszahl VZ betrug 131. Die Schmelztemperatur lag bei 80 °C. Die Nullscherviskosität η₀ bei 180 °C lag bei 370 Pa·s. Die Säurezahl betrug weniger als 1 mg KOH/g.

### Herstellungsbeispiel 3: Polyester A3

Polybutylenterephthalatadipat, das wie folgt hergestellt wurde: 697,7 g Terephthalsäure (35 mol %), 1139,9 g Adipinsäure (65 mol %), 1405,9 g 1,4-Butandiol (130 mol %) und 37,3 ml Glycerin (1,5 Gew.-%, bezogen auf das Polymer) wurden zusammen mit 2,12 ml Tetrabutylorthotitanat (TBOT) gemischt, wobei das Molverhältnis von Alkoholkomponente zu Säurekomponente 1,30 betrug. Das Reaktionsgemisch wurde auf eine Temperatur von 210 °C erhitzt und bei dieser Temperatur wurde über einen Zeitraum von 2 h das entstandene Wasser abdestilliert. Anschließend wurde die Temperatur auf 240 °C erhöht und schrittweise evakuiert. Überschüssiges 1,4-Butandiol wurde im Vakuum (< 1 mbar) über einen Zeitraum von 2 h abdestilliert.

Das zahlenmittlere Molekulargewicht des dabei erhaltenen Copolyesters lag bei 19500 g/mol, das gewichtsmittlere Molekulargewicht bei 178000 g/mol. Die Viskositätszahl VZ betrug 161. Die Schmelztemperatur lag bei 80 °C. Die Nullscherviskosität η₀ bei 180 °C lag bei 1300 Pa·s. Die Säurezahl betrug weniger als 1 mg KOH/g.

### Herstellungsbeispiel 4: Polyester A4

Polybutylenterephthalatadipat, das wie folgt hergestellt wurde: 726,8 g Terephthalsäure (35 Mol-%), 1187,4 g Adipinsäure (65 Mol-%), 1464,5 g 1,4-Butandiol (130 Mol-%) und 4,12 ml Glycerin (0,2 Gew.-%, bezogen auf das Polymer) wurden zusammen mit 2,21 ml Tetrabutylorthotitanat (TBOT) gemischt, wobei das Molverhältnis von Alkoholkomponente zu Säurekomponente 1,30 betrug. Das Reaktionsgemisch wurde auf eine Temperatur von 210 °C erhitzt und bei dieser Temperatur wurde über einen Zeitraum von 2 h das entstandene Wasser abdestilliert. Anschließend wurde die Temperatur auf 240 °C erhöht und schrittweise evakuiert. Überschüssiges 1,4-Butandiol wurde im Vakuum (< 1 mbar) über einen Zeitraum von 3 h abdestilliert.

Das zahlenmittlere Molekulargewicht des dabei erhaltenen Copolyesters lag bei 26000 g/mol, das gewichtsmittlere Molekulargewicht bei 140000 g/mol. Die Viskositätszahl VZ betrug 157. Die Schmelztemperatur lag bei 80 °C. Die Nullscherviskosität η₀ bei 180 °C lag bei 720 Pa·s. Die Säurezahl betrug weniger als 1 mg KOH/g.

### Herstellungsbeispiel 5: Polyester A5

Polybutylenterephthalatadipat, das wie folgt hergestellt wurde: 1095,2 g Terephthalat (47 mol %), 700g 1,4-Butandiol (65 mol%), 1 ml Glycerin (0,05 Gew.-%, bezogen auf das Polymer) wurden zusammen mit 1,1 ml Tetrabutylorthotitanat (TBOT) zuerst gemischt, und auf 160 °C erhitzt, Das entstandene Methanol wurde innerhalb 1 h abdestilliert. Danach wurde das Kessel auf ca. 140 °C abgekühlt. Anschließend gab man hierz 929,5 g Adipinsäure (53 mol %), 700 g 1,4-Butandiol (65 mol %) und 1 ml Glycerin (0,05 Gew.-%, bezogen auf das Polymer) zusammen mit 1,04 ml Tetrabutylorthotitanat (TBOT). Das Reaktionsgemisch wurde auf eine Temperatur von 190 °C erhitzt und bei dieser Temperatur wurde über einen Zeitraum von 1 h das entstandene Wasser abdestilliert. Anschließend wurde die Temperatur auf 240 °C erhöht und schrittweise evakuiert. Überschüssiges 1,4-Butandiol wurde im Vakuum (< 1 mbar) über einen Zeitraum von 1 h abdestilliert.

Das zahlenmittlere Molekulargewicht des dabei erhaltenen Copolyesters lag bei 21000 g/mol, das gewichtsmittlere Molekulargewicht bei 59000 g/mol. Die Viskositätszahl VZ betrug 106. Die Nullscherviskosität η₀ bei 180 °C lag bei 136 Pa.s. Die Säurezahl betrug weniger als 1 mg KOH/g.

### Herstellungsbeispiel 6: Polyester A6

Polybutylenterephthalatadipat, das wie folgt hergestellt wurde: 71,1 g des Natriumsalzes des Dimethyl-3-hydroxysulfonylisophtalsäureesters (Dimethyl-NaSIP 2mol%), 1048,6 g Terephthalat (45 mol %), 700g 1,4-Butandiol (65 mol%) wurden zusammen mit 1,1 ml Tetrabutylorthotitanat (TBOT) zuerst gemischt, und auf 160 °C erhitzt. Das entstandene Methanol wurde innerhalb 1 h abdestilliert. Danach wurde das Kessel auf ca. 140 °C abgekühlt. Hierzu gab man 929,5 g Adipinsäure (53 mol %), 700 g 1,4-Butandiol (65 mol %) und 2 ml Glycerin (0,1 Gew.-%, bezogen auf das Polymer) zusammen mit 1,04 ml Tetrabutylorthotitanat (TBOT). Das Reaktionsgemisch wurde auf eine Temperatur von 190 °C erhitzt und bei dieser Temperatur wurde über einen Zeitraum von 1 h das entstandene Wasser abdestilliert. Anschließend wurde die Temperatur auf 240 °C erhöht und schrittweise evakuiert. Überschüssiges 1,4-Butandiol wurde im Vakuum (< 1 mbar) über einen Zeitraum von 1,5 h abdestilliert.

Das zahlenmittlere Molekulargewicht des dabei erhaltenen Copolyesters lag bei ........ Die Viskositätszahl VZ betrug 137. Die Nullscherviskosität η₀ bei 180 °C lag bei 3280 Pa.s. Die Säurezahl betrug weniger als 1 mg KOH/g.

### Herstellungsbeispiel 7 (Copolyester B1, kettenverlängert):

Polybutylenterephthalatadipat, das wie folgt hergestellt wurde: 92,7 kg Terephthalat (40 mol %), 58,5kg 1,4-Butandiol (65 mol%), 0,1 kg Glycerin (0,05 Gew.-%, bezogen auf das Polymer) wurden zusammen mit 0,014 kg Tetrabutylorthotitanat (TBOT) gemischt, und auf 160 °C erhitzt, Das entstehende Methanol wurde in 1h abdestilliert. Danach wurde das Kessel auf ca. 140 °C abgekühlt. 83,3 kg Adipinsäure (60 mol %), 58,5kg 1,4-Butandiol (65 mol%), 0,1 kg Glycerin (0,05 Gew.-%, bezogen auf das Polymer) wurden zusammen mit 0,014 kg Tetrabutylorthotitanat (TBOT) zugemischt. Das Reaktionsgemisch wurde auf eine Temperatur von 190 °C erhitzt und bei dieser Temperatur wurde über einen Zeitraum von 1 h das entstandene Wasser abdestilliert. Die Temperatur wurde dann auf 250 °C erhöht und schrittweise evakuriert. Überschüssiges 1,4-Butandiol wurde im Vakuum von 8 mbar über einen Zeitraum von 50 min abdestilliert. Anschließend wurden bei 240 °C 0,9 kg Hexamethylendiisocyanat innerhalb 1 h langsam zudosiert.

Das zahlenmittlere Molekulargewicht des dabei erhaltenen Copolyesters lag bei 32000 g/mol, das gewichtsmittlere Molekulargewicht bei 170000 g/mol. Die Nullscherviskosität η₀ bei 180 °C lag bei 4010 Pa.s.

### Herstellungsbeispiel 8 (Copolyester B2, kettenverlängert):

Ein Polybutylenterephthalatadipat, das wie folgt hergestellt wurde: 69,4 kg Dimethylterephthalat (35 Mol-%), 90,2 kg Adipinsäure (65 Mol-%), 117 kg 1,4-Butandiol und 0,4 g Glycerin (0,2 Gew.-%, bezogen auf das Polymer) wurden zusammen mit 0,028 kg Tetrabutylorthotitanat (TBOT) gemischt, wobei das Molverhältnis von Alkoholkomponente zu Säurekomponente 1,30 betrug. Das Reaktionsgemisch wurde auf eine Temperatur von 180 °C erhitzt und bei dieser Temperatur 6 h lang umgesetzt. Anschließend wurde die Temperatur auf 240 °C erhöht und die überschüssige Dihydroxyverbindung unter Vakuum wurde über einen Zeitraum von 3 h abdestilliert. Anschließend wurden bei 240 °C 0,9 kg Hexamethylendiisocyanat innerhalb 1 h langsam zudosiert.

Das zahlenmittlere Molekulargewicht des dabei erhaltenen Copolyesters lag bei 32000 g/mol, das gewichtsmittlere Molekulargewicht bei 170000 g/mol. Die Nullscherviskosität η₀ bei 180 °C lag bei 2510 Pa·s.

### Herstellungsbeispiele 9 bis 13:

In Analogie zu dem Herstellungsbeispiel 1 (bzw. Herstellungsbeispiel 7) wurden die Copolyester der Herstellungsbeispiele 9 bis 13 hergestellt. Die molaren Zusammensetzungen der Copolyester sind in Tabelle 2 zusammengestellt, ihre Eigenschaften in Tabelle 3. Die Säurezahl betrug in allen Fällen weniger als 1 mg KOH/g.

**Tabelle 1:**

| Herst.-Bsp. | T [Mol-%] ^{1) 2)} | A [Mol-%] ^{1) 2)} | BD [Mol-%] ^{1) 2)} | G [Gew.-%] ^{1) 3)} |
|---|---|---|---|---|
| 9 | 35 | 65 | 100 | 1,5 |
| 10 | 27 | 73 | 100 | 0,12 |
| 11 (V) ⁴⁾ | 0 | 100 | 100 | 1,5 |
| 12 ⁵⁾ | 44 | 56 | 100 | 0,1 |
| 13 | 47 | 53 | 100 | 0,1 |

| | | | | |
|---|---|---|---|---|
| 1) T = Terephthalsäure, A = Adipinsäure, BD = 1,4-Butandiol, G = Glycerin 2) bezogen auf die Gesamtmenge an Terephthalsäure + Adipinsäure im Polyester 3) bezogen auf das Gesamtgewicht des Polyesters 4) Vergleichsbeispiel 5) Kettenverlängert, analog Herstellungsbeispiel 5 | | | | |

**Tabelle 3:**

| Herst.-Bsp. | M_{N} | Mw | VZ ¹⁾ | Smp. [°C] ²⁾ | η₀ ³⁾ [Pa·s] |
|---|---|---|---|---|---|
| 9 | 18400 | 230000 | 190 | 80 | 2500 |
| 10 | 22600 | 76300 | 130 | 64 | 164 |
| 11 (V) 4) | 25000 | 180000 | 160 | 60 | 350 |
| 12 | 32000 | 130000 | 180 | n.B. | 5600 |
| 13 | 28000 | 108000 | 134 | n.B. | 753 |

| | | | | | |
|---|---|---|---|---|---|
| 1) Viskositätszahl 2) Schmelztemperatur 3) Nullscherviskosität bei 180 °C 4) Vergleichsbeispiel Herstellung der wässrigen Polyesterdispersionen | | | | | |

### Dispergierbeispiel 1:

Die Emulgierversuche wurden in einer Versuchsanordnung umfassend (a) einen Rotor-Stator-Mischer vom Typ Cavitron CD 10 der Fa. Cavitron mit zwei Einlässen und einem Auslass, (b) einen Einschneckenextruder Tech-line E16 T der Dr. Colin GmbH, der über eine beheizte Leitung mit dem ersten Einlass des Rotor-Stator-Mischers verbunden war, (c) ein beheiztes, druckfestes Vorratsgefäß für das wässrige Dispergiermittel, das auslassseitig mit einer Zahnradpumpe zur Förderung des Dispergiermittels versehen war, welche über eine druckfeste Leitung mit dem zweiten Einlass des Rotor-Stator-Mischers verbunden war, einen Kühler, der über eine Druckhaltung mit dem Auslass des Rotor-Stator-Mischers verbunden war, sowie ein an den Auslass des Kühlers angeschlossenes Vorratsgefäß zum Auffangen der Dispersion. Der Rotor-Stator-Mischer wurde bei 4000 U/min betrieben.

Pellets des aliphatisch-aromatischen Copolyesters aus Herstellungsbeispiel 12 wurden über den Einfülltrichter in einer Menge von 0,3 kg/h in den Einschneckenextruder eingezogen, dort bei 200 °C aufgeschmolzen. Von dort wurde die Schmelze in den Rotor-Stator-Mischer gefördert. Gleichzeitig wurde mittels der Zahnradpumpe eine auf 180 °C erhitzte, 5 gew.-%ige Lösung von Polyvinylalkohol (Kuraray Poval 235) in Wasser mit einer Rate von 2,5 kg/h in den Rotor-Stator-Mischer gefördert. Die Temperatur im Rotor-Stator-Mischer lag bei 165 bis 170 °C und der Druck am Auslass des Mischers schwankte zwischen 8 und 12 bar. Die am Auslass des Mischers anfallende wässrige Emulsion wurde mittels des Kühlers auf 20 °C gekühlt. Auf diese Weise erhielt man eine wässrige, lösungsmittelfreie Dispersion mit einem Polyestergehalt von 11 Gew.-%. Die mittels Lichtstreuung bestimmte Teilchengrößenverteilungskurve zeigte einen Hauptpeak mit einem Maximum bei 700 nm und einen weiteren Peak mit einem Maximum bei 1000 nm.

### Dispergierbeispiel 2:

Als Rotor-Stator-Mischer diente eine 3-stufige Inline-Dispergiervorrichtung, die drei sequentiell geschaltete auf einem gemeinsamen Rotor angeordnete Rotor-Stator-Mischeinheiten aufwies, wobei die Vorrichtung in der ersten und dritten Stufe mit schraubenförmigen Elementen und in der zweiten und dritten Stufe mit zahnkranzartigen Scherelementen versehen war.

Der Copolyester aus Herstellungsbeispiel 10 (η₀ = 164 Pa.s) wurde kontinuierlich über den Einfülltrichter in einer Menge von 0,83 kg/h in den Einschneckenextruder (Tech-line E 16 T von Dr. Colin GmbH) eingezogen und dort bei 135 °C aufgeschmolzen. Die Polymerschmelze wurde in die erste Stufe Dispergiervorrichtung (3000 U/min) eingespeist. Die Scherrate betrugt 8960 s⁻¹ und die Polymerviskosität bei dieser Scherrate 35 Pa s. Gleichzeitig wurde eine 7 gew.-%ige wässrige Lösung eines partiell verseiften Polyvinylalkohols (Kuraray Poval 224E), die 1 Gew.-% eines anionischen Tensids enthielt (Emulphor FAS 30 der BASF SE) in die drei Stufen der Inline-Dispergiervorrichtung eingespeist. Die Viskosität der wässrigen Lösung aus Polyvnylalkohol und Emulphor FAS 30 betrug 0,041 Pa s. Die Feststoffgehalte in der ersten und der zweiten Stufe lag bei 47 Gew.-% bzw. 35 Gew.-%. In der dritten Stufe wurde der Feststoffgehalt auf 29 Gew.-% eingestellt. Die Temperatur in der ersten und der zweiten Stufe betrug 135 °C und in der dritten Stufe lag bei 120 °C. Die gesamte Verweilzeit lag bei 2 min. Nach Verlassen der dritten Stufe wurde die Dispersion mittels eines Kühlbads auf 20 °C abgeschreckt.

Die erhaltene Dispersion wies die folgende Teilchengrößenverteilung auf: d₉₀ = 10,9 µm and d₄₃ = 6,2 µm.

Der pH-Wert der Dispersion lag bei 5,5 und die Viskosität (bei 25 °C) betrug 80 mPa.s.

### Dispergierbeispiel 3:

Als Rotor-Stator-Mischer diente eine 12-stufige Inline-Dispergiervorrichtung, wobei die Vorrichtung mit zahnkranzartigen Scherelementen versehen war.

Der Copolyester aus Herstellungsbeispiel 5 (η₀ = 136 Pa.s) wurde kontinuierlich über den Einfülltrichter in einer Menge von 1,2 kg/h in den Einschneckenextruder (Tech-line E 16 T von Dr. Colin GmbH) eingezogen und dort bei 150 °C aufgeschmolzen. Die Polymerschmelze wurde in die erste Stufe Dispergiervorrichtung (4000 U/min) eingespeist. Die Scherrate betrugt 12566 s⁻¹. Die Polymerviskosität bei dieser Scherrate betrug 17 Pa s. Gleichzeitig wurde eine 7 gew.-%ige wässrige Lösung eines partiell verseiften Polyvinylalkohols (Kuraray Poval 224E), die 1 Gew.-% eines anionischen Tensids enthielt (Emulphor FAS 30 der BASF SE) mit einer Lösungsviskosität von 0.038 Pa s in die Inline-Dispergiervorrichtung so eingespeist, dass in der ersten und der vierten Stufe Feststoffgehalte von 55 Gew.-% bzw. 45 Gew.-% resultierten. In der zehnten Stufe wurde der Feststoffgehalt auf 40 Gew.-% eingestellt. Die Temperatur in den ersten zehn Stufen lag bei 150 °C; in der elften und zwölften Stufen lag die Temperatur bei 130 °C. Die gesamte Verweilzeit lag bei 1,2 min. Nach Verlassen der letzten Stufe wurde die Dispersion mittels eines Kühlbads auf 20 °C abgeschreckt.

Die erhaltene Dispersion wies die folgende Teilchengrößenverteilung auf: d₉₀ = 3,8 µm and d₄₃ = 2,3 µm auf.

Der pH-Wert der Dispersion lag bei 5,5 und die Viskosität (bei 25 °C) betrug 1,6 Pa.s.

### Dispergierbeispiel 4:

Als Rotor-Stator-Mischer diente eine 3-stufige Inline-Dispergiervorrichtung, die drei sequentiell geschaltete auf einem gemeinsamen Rotor angeordnete Rotor-Stator-Mischeinheiten aufwies, wobei die Vorrichtung in der ersten und dritten Stufe mit schraubenförmigen Elementen und in der zweiten und dritten Stufe mit zahnkranzartigen Scherelementen versehen war.

Der Copolyester aus Herstellungsbeispiel 6 (η₀ = 2810 Pa.s) wurde kontinuierlich über den Einfülltrichter in einer Menge von 0,45 kg/h in den Einschneckenextruder (Tech-line E 16 T von Dr. Colin GmbH) eingezogen und dort bei 140 °C aufgeschmolzen. Die Polymerschmelze wurde in die erste Stufe Dispergiervorrichtung (3000 U/min) eingespeist. Gleichzeitig wurde eine 2 gew.-%ige wässrige Lösung eines partiell verseiften Polyvinylalkohols (Kuraray Poval 224E) in die drei Stufen der Inline-Dispergiervorrichtung eingespeist. Die Feststoffgehalte in der ersten und der zweiten Stufe lag bei ca. 52 Gew.-% bzw. 40 Gew.-%. In der dritten Stufe wurde der Feststoffgehalt auf 30 Gew.-% eingestellt. Die Temperatur in der ersten und der zweiten Stufe betrug 140 °C und in der dritten Stufe lag bei 120 °C. Die gesamte Verweilzeit lag bei 2 min. Nach Verlassen der dritten Stufe wurde die Dispersion mittels eines Kühlbads auf 20 °C abgeschreckt.

Die erhaltene Dispersion wies eine multimodale Teilchengrößeverteilung mit Peaks bei d₄₃ = 0,33 µm, d₄₃ =2,5 µm und d₄₃ = 6,5 µm auf. Der pH-Wert der Dispersion lag bei 5,2 und die Viskosität (bei 25 °C) betrug 60 mPa.s.

Anwendung der wässrigen Polyesterdispersionen als Barrierebeschichtung auf Papier

### Anwendungsbeispiel 1

Holzfreies Rohpapier (der Firma Magnostar, 70 g/m²) wurde mit der wässerigen Polyesterdispersion aus Dispergierbeispiel 4 mittels eines Handrakels (Nr. 3) mit der Geschwindigkeit Stufe 5 einseitig beschichtet. Das beschichtete Papier wurde anschließend 1 min. im Trockenschrank bei 110 °C getrocknet. Auf diese Weise wurde ein beschichtetes Papier mit einer Polyesterbeschichtung von 16 g/m² (fest) erhalten.

### Anwendungsbeispiel 2

Holzfreies Rohpapier (der Firma Magnostar, 58 g/m²) wurde mit der wässerigen Polyesterdispersion aus Dispergierbeispiel 4 mittels einer Laborstreichmaschine (BASF, Eigenbau) mit einer Geschwindigkeit von 10 m/min 2 mal einseitig beschichtet und mittels IR-Strahlung sofort getrocknet. Auf diese Weise wurde ein beschichtetes Papier mit einer Polyesterbeschichtung von 14 g/m² (fest) erhalten.

### Prüfung der Barriereeigenschaften

Die Barriereeigenschaft der mit der Polyesterdispersion beschichten Papiere aus den Anwendungsbeispielen 1 und 2 wurden anschließend gemäß des "Oil Penetration Test" untersucht. Hierzu wurde die beschichtete Papierseite mit 2 ml Ölsäure benetzt. Dann wurde das Papier bei 60 °C für einen längeren Zeitraum gelagert. Dann wurde die Rückseite des beschichteten Papiers visuell bezüglich Fleckenbildung begutachtet.

Die Oberfläche des beschichteten Papiers aus Anwendungsbeispiel 1 wies nach 1 h Lagerung bei 60°C keine (d.h. 0%) Flecken auf. Dies entspricht einer Ölpenetration von 0 % bei 60 °C für 1 h. Das unbeschichte Magnostar Rohpapier (70 g/m²) wies bereits nach 5 min. Lagerung bei 60°C 100% Ölpenetration auf.

Die Oberfläche des beschichteten Papiers aus Anwendungsbeispiel 2 wies nach 16 h Lagerung bei 60°C keine (d.h. 0%) Flecken auf. Dies entspricht einer Ölpenetration von 0 % bei 60 °C für 16h. Das unbeschichte Magnostar Rohpapier (58 g/m²) wies bereits nach 5 min. Lagerung bei 25°C 100% Ölpenetration auf.

## Patentansprüche

1. Verfahren zur Herstellung wässriger Dispersionen von thermoplastischen Polymeren, die eine Vielzahl von Estergruppen und/oder Carbonatgruppen im Polymerrückgrad aufweisen, die eine Säurezahl von weniger als 5 mg KOH/g besitzen und die bei 180 °C eine Nullscherviskosität η₀ von wenigstens 60 Pa·s aufweisen,
wobei man eine Zusammensetzung des Polymeren, die zu wenigstens 99 Gew.-% aus dem Polymeren besteht, bei einer Temperatur oberhalb der Schmelz- oder Erweichungstemperatur des Polymeren in ein wässriges Dispergiermedium einbringt, das wenigstens eine oberflächenaktive Substanz enthält, die unter Emulgatoren und Schutzkolloiden ausgewählt ist, und die dabei erhaltene wässrige Emulsion des Polymeren abschreckt,
**dadurch gekennzeichnet, dass** das Einbringen des Polymeren in das wässrige Dispergiermedium in einer Mischvorrichtung erfolgt, die wenigstens einen Rotor-Stator-Mischer aufweist.

2. Verfahren nach Anspruch 1, wobei der Rotor-Stator-Mischer eine Zahnkranzdispergiermaschine ist.

3. Verfahren nach einem der vorhergehenden Ansprüche, wobei die Mischvorrichtung mehrere, seriell miteinander verbundene Rotor-Stator-Mischer aufweist.

4. Verfahren nach Anspruch 3, wobei man die Zusammensetzung des thermoplastischen Polymeren, die zu wenigstens 99 Gew.-% aus dem Polymeren besteht, bei einer Temperatur oberhalb der Schmelz- oder Erweichungstemperatur des Polymeren in einem ersten Rotor-Stator-Mischer mit einer Teilmenge des wässrigen Dispergiermediums vermischt und die dabei erhaltene wässrige Emulsion des Polyesters in dem bzw. den weiteren Rotor-Stator-Mischer(n) mit weiterem wässrigen Dispergiermedium vermischt.

5. Verfahren nach einem der vorhergehenden Ansprüche, wobei das Einbringen der Schmelze in das wässrige Dispergiermedium bei einer Temperatur von wenigstens 20 K oberhalb der Schmelz- bzw. Erweichungstemperatur des Polymeren erfolgt.

6. Verfahren nach einem der vorhergehenden Ansprüche, wobei das Polymer ausgewählt ist aus der Gruppe der Polyester, Polyetherester, Polyesteramide, Polycarbonate und deren Gemischen.

7. Verfahren nach Anspruch 6, wobei das Polymer ausgewählt ist aus der Gruppe der aliphatischen Polyester, aliphatischen Copolyester, aliphatisch-aromatischen Copolyester und deren Gemischen.

8. Verfahren nach einem der vorhergehenden Ansprüche, wobei das Polymer ein Polyester ist, der im Wesentlichen aufgebaut ist aus:
a) wenigstens einer Dicarbonsäurekomponente A, die aus a1)
wenigstens einer aliphatischen oder cycloaliphatischen Dicarbonsäure oder deren esterbildenden Derivaten oder Mischungen davon und
a2) gegebenenfalls einer oder mehreren aromatischen Dicarbonsäuren oder deren esterbildenden Derivaten oder Mischungen davon besteht;
b) wenigstens einer Diolkomponente B, die unter aliphatischen und cycloaliphatischen Diolen und deren Gemischen ausgewählt ist;
c) gegebenenfalls einer oder mehreren weiteren bifunktionellen Verbindungen C, die mit Carbonsäure- oder Hydroxylgruppen unter Bindungsbildung reagieren; und
d) gegebenenfalls einer oder mehreren Verbindungen D, die wenigstens 3 Funktionalitäten aufweisen, die mit Carbonsäure- oder Hydroxylgruppen unter Bindungsbildung reagieren;
wobei die Verbindungen a1), a2), B), C) und D) nicht mehr als 3 mol-%, bezogen auf die Gesamtmenge an Verbindungen der Komponente A, solche Verbindungen umfassen, die eine oder mehrere Sulfonsäuregruppen aufweisen, wobei das Molverhältnis der Komponente A zur Komponente B im Bereich von 0,4 : 1 bis 1 : 1 liegt und die Komponenten A und B wenigstens 80 Gew.-% des Polyesters ausmachen.

9. Verfahren nach Anspruch 8, wobei das Polymer ein kettenverlängerter Polyester ist.

10. Verfahren nach einem der vorhergehenden Ansprüche, wobei das Polymer einen Verzweigungsgrad von 0,0005 bis 1 mol/kg aufweist.

11. Verfahren nach einem der vorhergehenden Ansprüche, wobei das Polymer bei 180 °C eine Nullscherviskosität η₀ im Bereich von 60 bis 10000 Pa·s aufweist.

12. Verfahren nach einem der vorhergehenden Ansprüche, wobei die oberflächenaktive Substanz wenigstens ein Schutzkolloid umfasst.

13. Verfahren nach Anspruch 12, wobei das Schutzkolloid unter neutralen, OH-Gruppen tragenden Polymeren ausgewählt ist.

14. Verfahren nach Anspruch 12, wobei das Schutzkolloid unter wasserlöslichen Copolyestern, die aromatisch gebundene Sulfonatgruppen in ihrer Salzform in einer Menge von 0,3 bis 1,5 mmol/g aufweisen, ausgewählt ist.

15. Verfahren nach einem der vorhergehenden Ansprüche, wobei die oberflächenaktive Substanz wenigstens einen anionischen Emulgator umfasst, der eine sulfatierte Oligo-C₂-C₃-alkylenoxid-Gruppe aufweist.

16. Verfahren nach einem der vorhergehenden Ansprüche, wobei das wässrige Dispergiermedium die oberflächenaktive Substanz in einer Konzentration von 0,5 bis 20 Gew.-% enthält.

17. Wässrige Polymerdispersion, erhältlich nach einem Verfahren gemäß einem der vorhergehenden Ansprüche.

18. Wässrige Polymerdispersion nach dem vorherigen Anspruch 17, worin wenigstens 90 Gew.-% der Polymerpartikel der Dispersion einen Teilchendurchmesser, bestimmt durch Lichtstreuung, unterhalb 10 µm aufweisen.

19. Verwendung einer wässrigen Polymerdispersion nach einem der Ansprüche 17 oder 18 als Bindemittel in Beschichtungszusammensetzungen, als Leimungsmittel für Papier, als Papierverfestigungsmittel, als Bindemittelzusammensetzungen für Vliesstoffe, in Klebstoffen, zur Herstellung von Barrierebeschichtungen oder zur Formulierung von Wirkstoffen.

20. Thermoplastischer Polyester, enthaltend, in Form ihrer Kondensationsprodukte:
a1) 65 bis 80 Mol-%, bezogen auf die Gesamtmenge der Komponenten a1) und a2), wenigstens einer aliphatischen Dicarbonsäure oder deren esterbildendes Derivat oder Mischungen davon und
a2) 20 bis 35 Mol-%, bezogen auf die Gesamtmenge der Komponenten a1) und a2), Terephthalsäure oder deren esterbildenden Derivate oder Mischungen davon;
b) 98 bis 102 Mol-%, bezogen auf die Gesamtmenge der Komponenten a1) und a2), wenigstens einer Diolkomponente b), die unter 1,3-Propandiol und 1,4-Butandiol und deren Gemischen ausgewählt ist;
c) 0 bis 2 Gew.-%, bezogen auf das Gesamtgewicht des Polyesters, eine oder mehrere weitere bifunktionelle Verbindungen C, die mit Carbonsäure- oder Hydroxylgruppen unter Bindungsbildung reagieren; und
d) 0,1 bis 2 Gew.-%, bezogen auf das Gesamtgewicht des Polyesters, einer oder mehreren Verbindungen D, die wenigstens 3 Funktionalitäten aufweisen, die mit Carbonsäure- oder Hydroxylgruppen unter Bindungsbildung reagieren;
und die Komponenten a1), a2) und b) 96 bis 99,8 Gew.-% des Polyesters ausmachen.

21. Thermoplastischer Polyester nach Anspruch 20, wobei die Verbindung D Glycerin ist.

22. Thermoplastischer Polyester nach Anspruch 20 oder 21, wobei die Verbindung C ein Diisocyanat ist und 0,1 bis 2 Gew.-%, bezogen auf das Gesamtgewicht des Polyesters ausmacht.

23. Thermoplastischer Polyester nach einem der Ansprüche 20 bis 22, wobei die Komponente a1) ausgewählt ist unter Bernsteinsäure, Adipinsäure, Sebazinsäure, Azelainsäure, Brassylsäure, und deren Gemischen, sowie den esterbildenden Derivaten davon.

24. Thermoplastischer Polyester nach einem der Ansprüche 20 bis 23, der eine Säurezahl von weniger als 5 mg KOH/g besitzt und bei 180 °C eine Nullscherviskosität η₀ von wenigstens 60 Pa·s aufweist.

## Claims

1. A process for producing aqueous dispersions of thermoplastic polymers which have a plurality of ester groups and/or carbonate groups in the main polymer chain and which have an acid number of less than 5 mg KOH/g, and which have a zero-shear viscosity η₀ of at least 60 Pa·s at 180°C,
where a composition which comprises the polymer and which is composed of at least 99% by weight of the polymer is introduced, at a temperature above the melting or softening point of the polymer, into an aqueous dispersion medium which comprises at least one surfactant substance selected from emulsifiers and protective colloids, and the resultant aqueous emulsion of the polymer is quenched,
**characterized in that** the introduction of the polymer into the aqueous dispersion medium is carried out in a mixing apparatus which has at least one rotor-stator mixer.

2. The process according to claim 1, where the rotor-stator mixer is a toothed-ring dispersing machine.

3. The process according to any of the preceding claims, where the mixing apparatus has a plurality of rotor-stator mixers connected to one another in series.

4. The process according to claim 3, where the composition which comprises the thermoplastic polymer, and which is composed of at least 99% by weight of the polymer, is mixed at a temperature above the melting or softening point of the polymer, in a first rotor-stator mixer, with a portion of the aqueous dispersion medium, and the resultant aqueous emulsion of the polyester is mixed with further aqueous dispersion medium in the further rotor-stator mixer(s).

5. The process according to any of the preceding claims, where the introduction of the melt into the aqueous dispersion medium takes place at a temperature which is at least 20 K above the melting or softening point of the polymer.

6. The process according to any of the preceding claims, where the polymer is selected from the group of the polyesters, polyetheresters, polyesteramides, polycarbonates, and mixtures of these.

7. The process according to claim 6, where the polymer is selected from the group of the aliphatic polyesters, aliphatic copolyesters, aliphatic-aromatic copolyesters, and mixtures of these.

8. The process according to any of the preceding claims, where the polymer is a polyester which in essence is composed of:
a) at least one dicarboxylic acid component A, which is composed of
a1) at least one aliphatic or cycloaliphatic dicarboxylic acid or ester-forming derivatives thereof, or a mixture thereof, and
a2) optionally one or more aromatic dicarboxylic acids or ester-forming derivatives thereof, or a mixture thereof;
b) at least one diol component B, selected from aliphatic and cycloaliphatic diols and mixtures thereof;
c) optionally one or more further bifunctional compounds C which react with carboxylic acid groups or with hydroxy groups to form bonds; and
d) optionally one or more compounds D which have at least 3 functionalities which react with carboxylic acid groups or with hydroxy groups to form bonds;
where the compounds a1), a2), B), C), and D) comprise not more than 3 mol%, based on the total amount of compounds of component A, of compounds which have one or more sulfonic acid groups, and where the molar ratio of component A to component B is in the range from 0.4:1 to 1:1, and components A and B make up at least 80% by weight of the polyester.

9. The process according to claim 8, where the polymer is a chain-extended polyester.

10. The process according to any of the preceding claims, where the degree of branching of the polymer is from 0.0005 to 1 mol/kg.

11. The process according to any of the preceding claims, where the polymer has a zero-shear viscosity η₀ in the range from 60 to 10 000 Pa·s at 180°C.

12. The process according to any of the preceding claims, where the surfactant substance comprises at least one protective colloid.

13. The process according to claim 12, where the protective colloid is selected from neutral polymers bearing OH groups.

14. The process according to claim 12, where the protective colloid is selected from water-soluble copolyesters which have an amount of from 0.3 to 1.5 mmol/g of aromatically bonded sulfonate groups in their salt form.

15. The process according to any of the preceding claims, where the surfactant substance comprises at least one anionic emulsifier which has a sulfated oligo-C₂-C₃-alkylene oxide group.

16. The process according to any of the preceding claims, where the aqueous dispersion medium comprises the surfactant substance in a concentration of from 0.5 to 20% by weight.

17. An aqueous polymer dispersion obtainable by a process according to any of the preceding claims.

18. The aqueous polymer dispersion according to the preceding claim 17, in which the diameter, determined by light scattering, of at least 90% by weight of the polymer particles of the dispersion is below 10 µm.

19. The use of an aqueous polymer dispersion according to either of claims 17 and 18 as binder in coating compositions, as sizing agents for paper, as paper strength enhancers, as binder compositions for nonwovens, or in adhesives, for producing barrier coatings or for formulating active ingredients.

20. A thermoplastic polyester comprising, in the form of condensation products thereof:
a1) from 65 to 80 mol%, based on the total amount of components a1) and a2), of at least one aliphatic dicarboxylic acid or ester-forming derivative thereof, or a mixture thereof, and
a2) from 20 to 35 mol%, based on the total amount of components a1) and a2), of terephthalic acid or ester-forming derivatives thereof, or a mixture thereof;
b) from 98 to 102 mol%, based on the total amount of components a1) and a2), of at least one diol component b), selected from 1,3-propanediol and 1,4-butanediol and mixtures thereof;
c) from 0 to 2% by weight, based on the total weight of the polyester, of one or more further bifunctional compounds C which react with carboxylic acid groups or with hydroxy groups to form bonds; and
d) from 0.1 to 2% by weight, based on the total weight of the polyester, of one or more compounds D which have at least 3 functionalities which react with carboxylic acid groups or with hydroxy groups to form bonds;
and components a1), a2), and b) make up from 96 to 99.8% by weight of the polyester.

21. The thermoplastic polyester according to claim 20, where the compound D is glycerol.

22. The thermoplastic polyester according to claim 20 or 21, where the compound C is a diisocyanate, and makes up from 0.1 to 2% by weight, based on the total weight of the polyester.

23. The thermoplastic polyester according to any of claims 20 to 22, where component a1) is selected from succinic acid, adipic acid, sebacic acid, azelaic acid, brassylic acid, and mixtures thereof, and also the ester-forming derivatives thereof.

24. The thermoplastic polyester according to any of claims 20 to 23, which has an acid number of less than 5 mg KOH/g and which has a zero-shear viscosity η₀ of at least 60 Pa·s at 180°C.

## Revendications

1. Procédé de fabrication de dispersions aqueuses de polymères thermoplastiques qui comprennent un grand nombre de groupes ester et/ou de groupes carbonate dans le squelette polymère, qui ont un indice d'acide inférieur à 5 mg KOH/g, et qui à 180°C présentent une viscosité à cisaillement nul η₀ inférieure à 60 Pa.s,
dans lequel on introduit une composition du polymère, qui à raison d'au moins 99 % en poids est constituée du polymère, à une température supérieure à la température de fusion ou de ramollissement du polymère, dans un milieu de dispersion aqueux, qui contient au moins une substance tensioactive qui est choisie parmi les émulsifiants et les colloïdes protecteurs, et qui refroidit l'émulsion aqueuse du polymère obtenue à cette occasion
**caractérisé en ce que** l'introduction du polymère dans le milieu de dispersion aqueux est réalisée dans un dispositif mélangeur qui comprend au moins un mélangeur à rotor-stator.

2. Procédé selon la revendication 1, dans lequel le mélangeur à rotor-stator est une machine de dispersion à couronne dentée.

3. Procédé selon l'une des revendications précédentes, dans lequel le dispositif mélangeur comprend plusieurs mélangeurs à rotor-stator, reliés en série les uns aux autres.

4. Procédé selon la revendication 3, dans lequel on mélange la composition du polymère thermoplastique qui à raison d'au moins 99 % en poids est constituée du polymère, à une température supérieure à la température de fusion ou de ramollissement du polymère, dans un premier mélangeur à rotor-stator, à une quantité partielle du milieu de dispersion aqueux, et on mélange à un milieu de dispersion aqueux supplémentaire l'émulsion aqueuse obtenue à cette occasion du polyester dans le ou les mélangeurs à rotor-stator supplémentaires.

5. Procédé selon l'une des revendications précédentes, dans lequel l'introduction de la masse fondue dans le milieu de dispersion est réalisée à une température d'au moins 20 K supérieure à la température de fusion ou de ramollissement du polymère.

6. Procédé selon l'une des revendications précédentes, dans lequel le polymère est choisi dans le groupe des polyesters, des polyétheresters, des polyesteramides, des polycarbonates et des mélanges de ceux-ci.

7. Procédé selon la revendication 6, dans lequel le polymère est choisi dans le groupe des polyesters aliphatiques, des copolyesters aliphatiques, des copolyesters aliphatiques-aromatiques, et des mélanges de ceux-ci.

8. Procédé selon l'une des revendications précédentes, dans lequel le polymère est un polyester pour l'essentiel constitué :
a) d'au moins un composant acide dicarboxylique A, qui est constitué
a1) d'au moins un acide dicarboxylique aliphatique ou cycloaliphatique ou de ses dérivés estérifiables et ou mélanges de ceux-ci, et
a2) éventuellement d'un ou plusieurs acides dicarboxyliques aromatiques, ou leurs dérivés estérifiables ou de mélanges de ceux-ci ;
b) d'au moins un composant diol B, qui est choisi parmi les diols aliphatiques et cycloaliphatiques et leurs mélanges ;
c) éventuellement d'un ou plusieurs composés bifonctionnels supplémentaires C, qui réagissent avec les groupes acide carboxylique ou hydroxyle avec formation d'une liaison ; et
d) éventuellement d'un ou plusieurs composés D, qui comprennent 3 fonctionnalités qui réagissent avec les groupes acide carboxylique ou hydroxyle avec formation d'une liaison,
dans lequel les composés a1), a2), B), C) et D) ne comprennent pas plus de 3 % en moles, par rapport à la quantité totale des composés du composant A, de composés qui comprennent un ou plusieurs groupes acide sulfonique, le rapport en moles du composant A au composant B étant compris dans la plage de 0,4:1 à 1:1, et les composants A et B représentant au moins 80 % en poids du polyester.

9. Procédé selon la revendication 8, dans lequel le polymère est un polyester ayant subi une extension de chaîne.

10. Procédé selon l'une des revendications précédentes, dans lequel le polymère a un degré de ramification de 0,0005 à 1 mol/kg.

11. Procédé selon l'une des revendications précédentes, dans lequel le polymère présente à 180°C une viscosité à cisaillement nul η₀ comprise dans la plage de 60 à 10 000 Pa.s.

12. Procédé selon l'une des revendications précédentes, dans lequel la substance tensioactive comprend au moins un colloïde protecteur.

13. Procédé selon la revendication 12, dans lequel le colloïde protecteur est choisi parmi les polymères neutres portant des groupes OH.

14. Procédé selon la revendication 12, dans lequel le colloïde protecteur est choisi parmi les copolyesters insolubles dans l'eau qui comprennent des groupes sulfonate à liaison aromatique sous leur forme sel en une quantité de 0,3 à 1,5 mmol/g.

15. Procédé selon l'une des revendications précédentes, dans lequel la substance tensioactive comprend au moins un émulsifiant anionique, qui présente un groupe oligo-(oxyde d'alkylène en C₂-C₃) sulfaté.

16. Procédé selon l'une des revendications précédentes, dans lequel le milieu de dispersion aqueux contient la substance tensioactive à une concentration de 0,5 à 20 % en poids.

17. Dispersion aqueuse de polymères pouvant être obtenue par un procédé selon l'une des revendications précédentes.

18. Dispersion aqueuse de polymères selon la revendication précédente 17, dans laquelle au moins 90 % des particules polymères de la dispersion présentent une granulométrie, déterminée par diffusion de la lumière, inférieure à 10 µm.

19. Utilisation d'une dispersion aqueuse de polymères selon la revendication 17 ou 18 en tant que liant dans des compositions de revêtement, en tant qu'agents d'encollage pour le papier, en tant qu'agents de consolidation du papier, en tant que compositions de liants pour non-tissés, dans des adhésifs, pour fabriquer des revêtements barrière ou pour formuler des matières actives.

20. Polymère thermoplastique contenant, sous forme de leurs produits de condensation :
a1) 65 à 80 % en moles, par rapport à la quantité totale des composants a1) et a2), d'au moins un acide dicarboxylique aliphatique ou de son dérivé estérifiable ou de mélanges de ceux-ci, et
a2) 20 à 35 % en moles, par rapport à la quantité totale des composants a1) et a2), d'acide téréphtalique ou de ses dérivés estérifiables ou de mélanges de ceux-ci ;
b) 98 à 102 % en moles, par rapport à la quantité totale des composants a1) et a2), d'au moins un composant diol b) qui est choisi parmi le 1,3-propanediol et le 1,4-butanediol et leurs mélanges ;
c) 0 à 2 % en poids, par rapport au poids total du polyester, d'un ou plusieurs composés bifonctionnels supplémentaires C, qui réagissent avec les groupes acide carboxylique ou hydroxyle avec formation d'une liaison ; et
d) 0,1 à 2 % en poids, par rapport au poids total du polyester, d'un ou plusieurs composés D, qui comprennent au moins 3 fonctionnalités qui réagissent avec les groupes acide carboxylique ou hydroxyle avec formation d'une liaison ;
et les composants a1), a2) et b) représentant 96 à 99,8 % en poids du polyester.

21. Polyester thermoplastique selon la revendication 20, dans lequel le composé D est le glycérol.

22. Polyester thermoplastique selon la revendication 20 ou 21, dans lequel le composé C est un diisocyanate et représente 0,1 à 2 % en poids par rapport au poids total du polyester.

23. Polyester thermoplastique selon l'une des revendications 20 à 22, dans lequel le composant a1) est choisi parmi l'acide succinique, l'acide adipique, l'acide sébacique, l'acide azélaïque, l'acide brassylique et leurs mélanges, ainsi que les dérivés estérifiables de ceux-ci.

24. Polyester thermoplastique selon l'une des revendications 20 à 23, qui présente un indice d'acide inférieur à 5 mg KOH/g et présente à 180°C une viscosité à cisaillement nul η₀ inférieure à 60 Pa.s.
